# EUROPEAN PATENT SPECIFICATION

(11) **EP 4 131 620 B1**
(45) Date of publication and mention of the grant of the patent: **05.03.2025**
(21) Application number: 21778945.2
(22) Date of filing: 26.03.2021
(51) Int. Cl.: H01M 50/42, B32B 5/32, C08F 220/24, H01M 50/443, H01M 50/449, H01M 50/451, H01M 50/489, C08K 3/08

(54) **POROUS FILM, SEPARATOR FOR SECONDARY BATTERY, AND SECONDARY BATTERY**
PORÖSER FILM, SEPARATOR FÜR SEKUNDÄRBATTERIE UND SEKUNDÄRBATTERIE
FILM POREUX, SÉPARATEUR POUR BATTERIE SECONDAIRE, ET BATTERIE SECONDAIRE

(30) Priority: 31.03.2020 JP 2020062395
(43) Date of publication of application: 08.02.2023
(73) Proprietor: Toray Industries, Inc., Tokyo 103-8666 (JP)
(72) Inventor: KAI, Nobuyasu, Otsu-shi, Shiga 520-8558 (JP); KAMON, Keiichi, Otsu-shi, Shiga 520-8558 (JP); TANAKA, Hiroko, Nasushiobara-shi, Tochigi 329-2763 (JP); TSUKUDA, Akimitsu, Otsu-shi, Shiga 520-8558 (JP); IMAZU, Naoki, Nagoya-shi, Aichi 455-8502 (JP)
(74) Representative: Kador & Partner Part mbB
(86) International application number: PCT/JP2021/012848
(87) International publication number: WO 2021/200648

(56) References cited:
- EP-A1- 3 609 004
- WO-A1-2013/125645
- WO-A1-2015/064411
- US-A1- 2014 147 726

## Description

### Technical Field

The present invention relates to a porous film, a separator for secondary battery, and a secondary battery.

### Background Art

Secondary batteries such as lithium ion batteries are widely used in automobile applications such as electric vehicles, hybrid vehicles, and plug-in hybrid vehicles, portable digital devices such as smartphones, tablets, mobile phones, notebook computers, digital cameras, digital video cameras, and portable game machines, electric tools, electric motorcycles, electric assist bicycles, and the like.

Lithium ion batteries generally have a configuration in which a secondary battery separator and an electrolyte are interposed between a positive electrode in which a positive electrode active material is layered on a positive electrode current collector and a negative electrode in which a negative electrode active material is layered on a negative electrode current collector.

As the secondary battery separator, a polyolefin-based porous substrate is used. Examples of properties required for secondary battery separators include: a property of permitting ion migration with an electrolytic solution contained in porous structures; and shutdown characteristics of stopping discharging by melted separator to close the porous structure and to halt the ion migration at the time of abnormal heat generation in the lithium ion battery.

In addition, with increased capacity and output of secondary batteries, separators for secondary batteries are required to have a high level of safety, and there has been required thermal dimensional stability for preventing short circuits due to contact of a positive electrode with a negative electrode, which is caused by thermal shrinkage of the separators for secondary batteries at a high temperature.

Furthermore, in the manufacturing process of secondary batteries, prior to being impregnated with an electrolytic solution, the separators are required to have adhesiveness to electrodes: in order to maintain a layered structure in which a positive electrode, a separator, and a negative electrode are layered when the layered body is transported; in order the shape of the layered body in which positive electrode, separator, and negative electrode are layered and wound not to deform when the hot-pressed layered body is inserted into a can having a shape of cylinder, square, etc.; in order the layered bodies to be hot-pressed to put an increased number of layered bodies into the can thereby enhancing the energy density, or in order laminated type secondary batteries not to deform after inserted into an exterior material.

On the other hand, the lithium ion batteries are also required to have excellent battery properties such as higher output and longer life, they are required to exhibit long lasting excellent battery properties without deteriorated high output characteristics.

Furthermore, the secondary battery separator satisfying the above characteristics is required to be provided at low cost.

In response to these requirements, Patent Literature 1 envisages to achieve a balance between the adhesiveness to electrodes and blocking resistance by disposing an adhesive layer formed on a heat resistant layer. In Patent Literature 2, the adhesiveness to electrodes is increased by establishing a specified relationship between the particle size of particulate polymers and the particle size of inorganic particles. EP3609004A1 discloses a separator for a non-aqueous secondary battery comprising a separator substrate, and a functional layer (B) formed on the separator substrate, wherein the functional layer (B) contains a non-electroconductive particle, and the binder composition comprises: a water-insoluble polymer and a water-soluble polymer. US2014147726A1 discloses a porous membrane for a secondary battery, and a separator for a secondary battery, the porous membrane comprising non-conductive particles and a water-soluble polymer.

### Citation List

### Patent Literature

Patent Literature 1: JP 6191597 B2
Patent Literature 2: WO 2018/034094 A

### Summary of Invention

### Technical Problem

As described above, the adhesiveness of the electrode to the separator is required in the hot pressing step of the process of manufacturing secondary batteries. In addition, excellent battery properties are also required, and it is necessary to achieve a balance among thermal dimensional stability, adhesiveness, high output characteristics, and long life of battery properties at low cost.

In view of the above problems, an object of the present invention, as defined in the appended claims, is to provide, inexpensively, a porous film that has superior thermal dimensional stability, adhesiveness to electrodes, and excellent battery properties.

### Solution to Problem

Therefore, the present inventors have conducted intensive studies in order to provide a low-cost porous film having excellent thermal dimensional stability, adhesiveness to electrodes, and excellent battery properties. As a result, it has been turned out that the test conditions described in Patent Literatures 1 and 2 are inadequate to evaluate blocking resistance, and the blocking resistance obtained in the technique described in Patent Literature 1 was insufficient under appropriate test conditions, and it has been found that the adhesiveness to electrodes was insufficient when the blocking resistance was improved. It has been also found that when hot pressing caused the swelling of the adhesive layer which filled voids in the electrode active material and the separator, thereby decreasing the void ratio, which leads to decreased ion transport numbers, consequently the battery properties were decreased as well. Furthermore, the secondary battery separator disclosed in Patent Literature 1 is expensive since an adhesive layer is coated on a heat resistant layer, and hence it is difficult to cost-effectively achieve a balance among thermal dimensional stability, adhesiveness, and battery properties by the techniques described in Patent Literatures 1 and 2.

In order to solve the above problems, the porous film of the present invention has the following configuration.
(1) A porous film including: a porous substrate; and a porous layer on at least one surface of the porous substrate, the porous layer containing particles A, wherein the particles A have a mixture that contains: a polymer that includes a fluorine-containing (meth)acrylate monomer; and a polymer that includes a monomer having two or more reactive groups per molecule, or the particles A have a copolymer that contains: a fluorine-containing (meth)acrylate monomer; and a monomer having two or more reactive groups per molecule, the particles A contain the monomer having two or more reactive groups per molecule in an amount of more than 10% by mass and 30% by mass or less, where all components of the particles A are assumed to constitute 100% by mass.
(2) The porous film according to (1), wherein the monomer having two or more reactive groups per molecule is a (meth)acrylate having two or more reactive groups per molecule.
(3) The porous film according to (1) or (2), wherein the monomer having two or more reactive groups per molecule is alkylene glycol di(meth)acrylate or urethane di(meth)acrylate.
(4) The porous film according to any one of (1) to (3), wherein a homopolymer that includes the monomer having two or more reactive groups per molecule has a glass transition temperature of -50°C or higher and 0°C or lower.
(5) The porous film according to any one of (1) to (4), wherein the particles A further contain at least one specific monomer selected from the group consisting of an unsaturated carboxylic acid monomer, a (meth)acrylic acid ester monomer, a styrene-based monomer, an olefin-based monomer, a diene-based monomer, and an amide-based monomer, and the particles A contain the monomer in an amount of 20% by mass or more and 80% by mass or less.
(6) The porous film according to any one of (1) to (5), wherein the copolymer having the fluorine-containing (meth)acrylate monomer and the monomer having two or more reactive groups per molecule is a copolymer further containing at least one specific monomer selected from the group consisting of an unsaturated carboxylic acid monomer, a (meth)acrylic acid ester monomer, a styrene-based monomer, an olefin-based monomer, a diene-based monomer, and an amide-based monomer.
(7) The porous film according to (5) or (6), wherein at least one of the (meth)acrylic acid ester monomers is a monomer selected from isobornyl (meth)acrylate, dicyclopentanyl (meth)acrylate, dicyclopentenyl (meth)acrylate, cyclohexyl (meth)acrylate, or benzyl (meth)acrylate.
(8) The porous film according to (5) or (6), wherein at least one of the (meth)acrylic acid ester monomers is a (meth)acrylic acid ester monomer that includes a monocyclic cyclic hydrocarbon group, or is a (meth)acrylic acid ester monomer substituted with one or more alkyl groups.
(9) The porous film according to (5) or (6), wherein at least one of the (meth)acrylic acid ester monomers is a (meth)acrylic acid ester monomer including a hydroxyl group, and the particles A contain the (meth)acrylic acid ester monomer including a hydroxyl group in an amount of 1% by mass or more and 10% by mass or less.
(10) The porous film according to any one of (1) to (9), wherein the particles A contain the fluorine-containing (meth)acrylate monomer in an amount of more than 20% by mass and 80% by mass or less.
(11) The porous film according to any one of (1) to (10), wherein the fluorine-containing (meth)acrylate monomer contains 3 or more and 13 or less fluorine atoms.
(12) The porous film according to any one of (1) to (11), wherein the particles A have a glass transition temperature of -30°C or higher and 100°C or lower.
(13) The porous film according to any one of (1) to (12), wherein the porous layer contains particles B including inorganic particles.
(14) The porous film according to (13), wherein the porous layer contains the particles B in an amount of 60% by mass or more and 95% by mass or less where all components of the porous layer are assumed to constitute 100% by mass.
(15) The porous film according to any one of (1) to (14), wherein the porous layer contains a fluorine-free organic particle C.
(16) A separator for secondary battery, including the porous film according to any one of (1) to (15).
(17) A secondary battery, including the separator for secondary battery according to (16).

### Advantageous Effects of Invention

According to the porous film of the present invention, the porous film has a porous substrate and a porous layer that contains particles A on at least one surface of the porous substrate. The particles A have a mixture containing a polymer that includes a fluorine-containing (meth)acrylate monomer and a polymer that includes a monomer that have two or more reactive groups per molecule, or have a copolymer containing fluorine-containing (meth)acrylate monomers and monomers that have two or more reactive groups per molecule. The monomers having two or more reactive groups per molecule are contained in the particles A in an amount ranging from greater than 10% by mass to not more than 30% by mass, where all components of the particles A are assumed to constitute 100% by mass, whereby there can be obtained a porous film having an excellent thermal dimensional stability and an adhesiveness to electrodes, and the porous film is capable of providing a secondary battery having excellent battery properties at low cost.

### Description of Embodiments

The porous film of the present invention is a porous film including a porous substrate and a porous layer, in which a porous layer containing particles A is layered on at least one surface of the porous substrate.

Hereinafter, the porous film of the present invention will be described in detail.

### [Porous layer]

### (Particles A)

The porous layer in the present invention contains particles A. The particles A are particles that have a mixture that contains: a polymer that includes a fluorine-containing (meth)acrylate monomer; and a polymer that includes a monomer having two or more reactive groups per molecule, or the particles A are particles that have a copolymer that contains: fluorine-containing (meth)acrylate monomers; and monomers having two or more reactive groups per molecule.

In the present specification, the "polymer that includes a fluorine-containing (meth)acrylate monomer" refers to a homopolymer that includes a fluorine-containing (meth)acrylate monomer or a copolymer containing a fluorine-containing (meth)acrylate monomer. The wording "polymer that includes a monomer having two or more reactive groups per molecule" refers to a homopolymer that includes a monomer having two or more reactive groups per molecule or a copolymer containing a monomer having two or more reactive groups per molecule. In addition, an "organic resin" included on the particles A may refer to a homopolymer that includes a fluorine-containing (meth)acrylate monomer, a homopolymer that includes a monomer having two or more reactive groups per molecule, a homopolymer that includes a monomer included in a specific monomer group, and a copolymer that includes a fluorine-containing (meth)acrylate monomer and a monomer having two or more reactive groups per molecule.

The particles A contain: a polymer that includes a fluorine-containing (meth)acrylate monomer; or a copolymer that includes a fluorine-containing (meth)acrylate monomer and a monomer having two or more reactive groups per molecule, so that the particles A can have a reduced surface free energy, and at the time of coating a coating liquid containing the particles A onto a porous substrate, the particles A can be unevenly distributed to the surface side, and the adhesiveness of the porous layer to an electrode can be improved. In the present invention, the term "(meth)acrylate" means acrylate and/or methacrylate.

Examples of the fluorine-containing (meth)acrylate monomer include 2,2,2-trifluoroethyl (meth)acrylate, 2,2,3,3,3-pentafluoropropyl (meth)acrylate, 2-(perfluorobutyl) ethyl (meth)acrylate, 3-(perfluorobutyl)-2-hydroxypropyl (meth)acrylate, 2-(perfluorohexyl) ethyl (meth)acrylate, 3-perfluorohexyl-2-hydroxypropyl (meth)acrylate, 3-(perfluoro-3-methylbutyl)-2-hydroxypropyl (meth)acrylate, 1H, 1H, 3H-tetrafluoropropyl (meth)acrylate, 1H, 1H, 5H-octafluoropentyl (meth)acrylate, 1H, 1H, 7H-dodecafluoroheptyl (meth)acrylate, 1H-1-(trifluoromethyl) trifluoroethyl (meth)acrylate, 1H, 1H, 3H-hexafluorobutyl (meth)acrylate, 1,2,2,2-tetrafluoro-1-(trifluoromethyl) ethyl (meth)acrylate, 2-(perfluorooctyl) ethyl (meth)acrylate. One kind of the fluorine-containing (meth)acrylate monomer may be used singly, or two or more kinds thereof may be used in combination at any ratio.

The content of the fluorine-containing (meth)acrylate monomer in the particles A is preferably more than 20% by mass, more preferably 22% by mass or more, and still more preferably 25% by mass or more where all components of the particles A are assumed to constitute 100% by mass. The content is preferably 60% by mass or less, more preferably 50% by mass or less, still more preferably 40% by mass or less, and most preferably 35% by mass or less. When the content is within the above-described range, a sufficient adhesiveness to electrodes can be obtained.

The content of the fluorine-containing (meth)acrylate monomer in the particles A can be measured by using a known method. For example, first, the porous layer is detached from the porous film with water and an organic solvent such as an alcohol, and water and the organic solvent such as an alcohol are sufficiently dried thereby obtaining components contained in the porous layer. An organic solvent that dissolves the organic resin component is added to the obtained components thereby dissolving only the organic resin component. Subsequently, the organic solvent is dried and removed from the solution in which the organic resin component is dissolved, thereby extracting only the organic resin component. Using the obtained organic resin component, the content can be calculated from the signal intensity indicating the fluorine-containing (meth)acrylate monomer by nuclear magnetic resonance (¹H-NMR, ¹⁹F-NMR, ¹³C-NMR), infrared absorption spectroscopy (IR), X-ray photoelectron spectroscopy (XPS), X-ray fluorescence analysis (EDX), elemental analysis, pyrolysis gas chromatograph mass spectrometer (pyrolysis GC/MS), or the like. In particular, after the confirmation of the presence of the fluorine-containing (meth)acrylate monomer by pyrolysis GC/MS, the content of the fluorine-containing (meth)acrylate monomer can be determined by ¹³C-NMR (the organic resin component and an appropriate amount of a solvent (deuterated chloroform) were filled into a sample tube for solid NMR, followed by the measurement in DD/MAS method after the mixture was allowed to stand overnight).

The number of fluorine atoms in the fluorine-containing (meth)acrylate that is included in the fluorine-containing (meth)acrylate monomer is preferably 3 or more and 13 or less. The number of fluorine atoms is more preferably 3 or more and 9 or less, and still more preferably 3 or more and 5 or less. When the number of fluorine atoms is within the above range, it is possible to achieve a balance between lower surface free energy of the particles A and coating properties. When the number of fluorine atoms is 3 or more, the particles A have a sufficiently reduced surface free energy, and the adhesiveness to electrodes becomes sufficient. When the number of fluorine atoms is 13 or less, the coating properties to the porous substrate is secured, and productivity is improved.

Note that, the number of fluorine atoms in the fluorine-containing (meth)acrylate can be determined by using a known method. For example, first, the porous layer is detached from the porous film with water and an organic solvent such as an alcohol, and water and the organic solvent such as an alcohol are sufficiently dried thereby obtaining components contained in the porous layer. An organic solvent that dissolves the organic resin component is added to the obtained components thereby dissolving only the organic resin component. Subsequently, the organic solvent is dried and removed from the solution in which the organic resin component is dissolved, thereby extracting only the organic resin component. Using the obtained organic resin component, the content can be calculated from the signal intensity indicating the fluorine-containing (meth)acrylate monomer by nuclear magnetic resonance (¹H-NMR, ¹⁹F-NMR, ¹³C-NMR), infrared absorption spectroscopy (IR), X-ray photoelectron spectroscopy (XPS), X-ray fluorescence analysis (EDX), elemental analysis, pyrolysis gas chromatograph mass spectrometer (pyrolysis GC/MS), or the like. Among them, pyrolysis GC/MS is particularly useful.

The particles A contains: a polymer that includes a monomer having two or more reactive groups per molecule; or a copolymer that includes a fluorine-containing (meth)acrylate monomer and a monomer having two or more reactive groups per molecule. When the particles A contains: a polymer that includes a monomer having two or more reactive groups per molecule; or a copolymer that includes a fluorine-containing (meth)acrylate monomer and a monomer having two or more reactive groups per molecule, it is possible to obtain polymer particles which are excellent in electrolytic solution resistance with suppressed swelling property in an electrolytic solution, and excellent in adhesiveness to electrodes.

The content of the monomer having two or more reactive groups per molecule is more than 10% by mass and 30% by mass or less where all components of the particles A are assumed to constitute 100% by mass. The content is preferably 11% by mass or more, more preferably 12% by mass or more, and particularly preferably 13% by mass or more. The content is preferably 25% by mass or less, more preferably 20% by mass or less, and particularly preferably 18% by mass or less. When the amount of the monomer having two or more reactive groups per molecule is more than 10% by mass, a sufficient adhesiveness to electrodes can be provided. When the content is 30% by mass or less, polymer particles are excellent in stability. In addition, excellent battery properties can be imparted.

The content of the monomer having two or more reactive groups per molecule contained in the particles A can be determined by using a known method. For example, first, the porous layer is detached from the porous film with water and an organic solvent such as an alcohol, and water and the organic solvent such as an alcohol are sufficiently dried thereby obtaining components contained in the porous layer. An organic solvent that dissolves the organic resin component is added to the obtained components thereby dissolving only the organic resin component. Subsequently, the organic solvent is dried and removed from the solution in which the organic resin component is dissolved, thereby extracting only the organic resin component. Using the obtained organic resin component, the content can be calculated from the signal intensity indicating a monomer having two or more reactive groups per molecule by nuclear magnetic resonance (¹H-NMR, ¹⁹F-NMR, ¹³C-NMR), infrared absorption spectroscopy (IR), X-ray photoelectron spectroscopy (XPS), X-ray fluorescence analysis (EDX), elemental analysis, pyrolysis gas chromatograph mass spectrometer (pyrolysis GC/MS), or the like. In particular, upon confirmation of the presence of a monomer having two or more reactive groups per molecule by pyrolysis GC/MS, the content of the monomer having two or more reactive groups per molecule can be determined by ¹³C-NMR (into a solid NMR sample tube was filled the organic resin component and an appropriate amount of a solvent (deuterated chloroform), followed by measurement in DD/MAS method after the mixture was allowed to stand overnight).

As the polymer that includes a monomer having two or more reactive groups per molecule, there can be used a monomer capable of forming a crosslinked structure during polymerization. In particular, it is preferable to use a (meth)acrylate monomer, and it is more preferable to use an alkylene glycol di(meth)acrylate and a urethane di(meth)acrylate.

More specifically, examples of the monomer having two or more reactive groups per molecule include: a monofunctional monomer having a crosslinkable group which can be thermally crosslinked and one or more olefinic double bonds per molecule; and a polyfunctional monomer having two or more olefinic double bonds per molecule. The number of olefinic double bonds may be one per molecule or two or more per molecule. Examples of the crosslinkable group which can be thermally crosslinked include an epoxy group, an N-methylol amide group, an oxetanyl group, an oxazoline group, and combinations thereof.

Examples of monofunctional monomers having an epoxy group as a crosslinkable group which can be cured by thermal crosslinking and one or more olefinic double bonds per molecule include: unsaturated glycidyl ethers such as vinyl glycidyl ether, allyl glycidyl ether, butenyl glycidyl ether, and o-allyl phenyl glycidyl ether; monoepoxides of dienes or polyenes, such as butadiene monoepoxides, chloroprene monoepoxides, 4,5-epoxy-2-pentene, 3,4-epoxy-1-vinylcyclohexene, 1,2-epoxy-5,9-cyclododecadiene; alkenyl epoxides such as 3,4-epoxy-1-butene, 1,2-epoxy-5 hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl esters of 3-cyclohexene carboxylic acid, and glycidyl esters of 4-methyl-3-cyclohexene carboxylic acid.

Examples of monofunctional monomers having an N-methylol amide group as a crosslinkable group which can be thermally crosslinked and one or more olefinic double bonds per molecule include (meth)acrylamides having a methylol group such as N-methylol (meth)acrylamide.

Examples of monofunctional monomers having an oxetanyl group as a crosslinkable group which can be thermally crosslinked and one or more olefinic double bonds per molecule include 3-((meth)acryloyloxymethyl) oxetane, 3-((meth)acryloyloxymethyl)-2-trifluoromethyloxetane, 3-((meth)acryloyloxymethyl)-2-phenyloxetane, 2-((meth)acryloyloxymethyl) oxetane, and 2-((meth)acryloyloxymethyl)-4-trifluoromethyloxetane.

Examples of monofunctional monomers having an oxazoline group as a crosslinkable group which can be thermally crosslinked and one or more olefinic double bonds per molecule include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5 ethyl-2-oxazoline.

Examples of the polyfunctional monomer having two or more olefinic double bonds per molecule include allyl (meth)acrylate, ethylene range (meth)acrylate, diethylene glycol di (meth)acrylate, triethylene glycol di (meth)acrylate, tetraethylene glycol di (meth)acrylate, trimethylolpropane-tri (meth)acrylate, dipropylene glycol diallyl ether, polyglycol diallyl ether, triethylene glycol divinyl ether, hydroquinone diallyl ether, tetraallyloxyethane, trimethylolpropane-diallyl ether, allyl or vinyl ethers of other polyfunctional alcohols, triallylamine, methylene bisacrylamide, divinylbenzene, alkylene glycol di (meth)acrylate, and urethane di (meth)acrylate.

A homopolymer that includes the monomer having two or more reactive groups per molecule preferably has a glass transition temperature of -50°C or higher and 0°C or lower. More preferably, the glass transition temperature is -45°C or higher. The term "glass transition temperature" used here refers to a glass transition temperature defined as follows: in differential scanning calorimetry (DSC) in accordance with "JIS K 7121: 2012, Testing Methods for Transition Temperatures of Plastics", in the second temperature rise curve after initial first temperature rising and cooling, a point of intersection between a straight line, which is extended from the baseline of the curve at a temperature lower than the transition temperature toward higher temperature side, and a tangent line drawn at a point where the curve has a largest gradient in a region of stepwise change of the glass transition is defined as a glass transition temperature.

In the present invention, the mixture containing a polymer that includes a fluorine-containing (meth)acrylate monomer and a polymer that includes a monomer having two or more reactive groups per molecule can optionally contain a polymer that includes a monomer selected from a specific monomer group. The copolymer containing a fluorine-containing (meth)acrylate monomer and a monomer having two or more reactive groups per molecule may be a copolymer optionally containing a monomer selected from a specific monomer group. When a copolymer contains a monomer selected from a specific monomer group, the surface free energy and the glass transition temperature of the particles A can be adjusted to predetermined conditions.

The organic particles A can be a core-shell type particles, which include: a polymer that includes a monomer selected from a specific monomer group formed as a core; and, around which, a mixture containing a polymer that includes a fluorine-containing (meth)acrylate monomer and a polymer that includes a monomer having two or more reactive groups per molecule formed as a shell; or a copolymer containing a fluorine-containing (meth)acrylate monomer and a monomer having two or more reactive groups per molecule formed as a shell. The "core-shell type" used here includes a type in which the core portion is partially covered with the shell portion and the core portion and the shell portion coexist on the surface, as well as a type in which the core portion is entirely covered with the shell portion.

As a monomer included in the specific monomer group, there are exemplified an unsaturated carboxylic acid monomer, a (meth)acrylic acid ester monomer, a styrene-based monomer, an olefin-based monomer, a diene-based monomer, and an amide-based monomer. In the present invention, the "(meth)acrylic acid ester monomer" means an acrylic acid ester monomer and a methacrylic acid ester monomer.

As monomers included in these specific monomer groups, there are exemplified: unsaturated carboxylic acids such as acrylic acid, methacrylic acid, and crotonic acid; acrylic acid esters such as methyl acrylate, ethyl acrylate, n-propyl acrylate, isopropyl acrylate, n-butyl acrylate, isobutyl acrylate, t-butyl acrylate, pentyl acrylate, neopentyl acrylate, isoamyl acrylate, hexyl acrylate, heptyl acrylate, octyl acrylate, 2-ethylhexyl acrylate, nonyl acrylate, decyl acrylate, lauryl acrylate, 2-dimethylaminoethyl acrylate, 2-diethylaminoethyl acrylate, 2-dipropylaminoethyl acrylate, 2-diphenylaminoethyl acrylate, 3-(N,N-dimethylamino) propyl acrylate, n-tetradecyl acrylate, stearyl acrylate, cyclohexyl acrylate, hydroxyethyl acrylate, benzyl acrylate, isobornyl acrylate, dicyclopentanyl acrylate, dicyclopentenyl acrylate, hydroxymethyl acrylate, 2-hydroxyethyl acrylate, 3-hydroxypropyl acrylate, 4-hydroxybutyl acrylate, 5-hydroxypentyl acrylate, 6-hydroxyhexyl acrylate, 7-hydroxyheptyl acrylate, 8-hydroxyoctyl acrylate; methacrylic acid esters such as methyl methacrylate, ethyl methacrylate, n-propyl methacrylate, isopropyl methacrylate, n-butyl methacrylate, t-butyl methacrylate, isobutyl methacrylate, t-butyl methacrylate, t-butyl cyclohexyl methacrylate, pentyl methacrylate, neopentyl methacrylate, isoamyl methacrylate, hexyl methacrylate, heptyl methacrylate, octyl methacrylate, 2-ethylhexyl methacrylate, nonyl methacrylate, decyl methacrylate, lauryl methacrylate, 2-dimethylaminoethyl methacrylate, 2-diethylaminoethyl methacrylate, 2-dipropylaminoethyl methacrylate, 2-diphenylaminoethyl methacrylate, 3-(N,N-dimethylamino) propyl methacrylate, n-tetradecyl methacrylate, stearyl methacrylate, cyclohexyl methacrylate, hydroxyethyl methacrylate, benzyl methacrylate, isobornyl methacrylate, dicyclopentanyl methacrylate, dicyclopentenyl methacrylate, hydroxymethyl methacrylate, 2-hydroxyethyl methacrylate, 3-hydroxypropyl methacrylate, 4-hydroxybutyl methacrylate, 5-hydroxypentyl methacrylate, 6-hydroxyhexyl methacrylate, 7-hydroxyheptyl methacrylate, and 8-hydroxyoctyl methacrylate. More preferable examples include isobornyl (meth)acrylate, dicyclopentanyl (meth)acrylate, dicyclopentenyl (meth)acrylate, cyclohexyl (meth)acrylate, benzyl (meth)acrylate, methyl (meth)acrylate, and n-butyl (meth)acrylate. The monomers included in the specific monomer group may be used singly, or two or more thereof may be used in combination at any ratio.

The particles A contain the monomer selected from the specific monomer group preferably in an amount of 20% by mass or more, more preferably 30% by mass or more, still more preferably 40% by mass or more, and most preferably 50% by mass or more where all components of the particles A are assumed to constitute 100% by mass. The content is preferably 80% by mass or less. The content is more preferably 75% by mass or less, still more preferably 70% by mass or less, and most preferably 65% by mass or less. When the specific monomer group content in the particles A is 20% by mass or more, sufficient adhesiveness to electrodes can be obtained. When the content is 80% by mass or less, swelling property in an electrolytic solution can be suppressed, and excellent battery properties can be obtained.

Among the specific monomer groups, at least one of the (meth)acrylic acid ester monomers is preferably a (meth)acrylic acid ester monomer having a monocyclic cyclic hydrocarbon group or a (meth)acrylic acid ester monomer substituted with one or more alkyl groups in order to reduce the particle fusion at the time of preparing the particles A.

The particles A contain the (meth)acrylic acid ester monomer having a monocyclic cyclic hydrocarbon group or the (meth)acrylic acid ester monomer substituted with one or more alkyl group preferably in an amount of 20% by mass or more, more preferably 30% by mass or more, still more preferably 40% by mass or more, and most preferably 50% by mass or more where all components of the particles A are assumed to constitute 100% by mass. The content is preferably 80% by mass or less, more preferably 75% by mass or less, still more preferably 70% by mass or less, and most preferably 65% by mass or less. When the monomer content in the particles A is 20% by mass or more, sufficient adhesiveness to electrodes can be obtained. When the content is 80% by mass or less, swelling property in an electrolytic solution can be suppressed, and excellent battery properties can be obtained.

In addition, in order to obtain polymer particles excellent in stability upon particle formation, at least one of the (meth)acrylic acid ester monomers is preferably a (meth)acrylic acid ester monomer having a hydroxyl group.

The content of the (meth)acrylic acid ester monomer having a hydroxyl group contained in the particles A is preferably 1% by mass or more where all components of the particles A are assumed to constitute 100% by mass. The content is preferably 10% by mass or less. The content is more preferably 8% by mass or less, still more preferably 7% by mass or less. When the content of the hydroxyl group-containing (meth)acrylic acid ester monomer contained in the particles A is 1% by mass or more, there are obtained particles excellent in stability. When the content is 10% by mass or less, the particles A can have a reduced moisture adsorption, and excellent battery properties can be obtained.

Note that the content of the (meth)acrylate monomer having a hydroxyl group contained in the particles A can be measured using a known method. For example, first, the porous layer is detached from the porous film with water and an organic solvent such as an alcohol, and water and the organic solvent such as an alcohol are sufficiently dried thereby obtaining components contained in the porous layer. An organic solvent that dissolves the organic resin component is added to the obtained components thereby dissolving only the organic resin component. Subsequently, the organic solvent is dried and removed from the solution in which the organic resin component is dissolved, thereby extracting only the organic resin component. Using the obtained organic resin component, the content can be calculated from the signal intensity indicating the (meth)acrylate monomer having a hydroxyl group by nuclear magnetic resonance (¹H-NMR, ¹⁹F-NMR, ¹³C-NMR), infrared absorption spectroscopy (IR), X-ray photoelectron spectroscopy (XPS), X-ray fluorescence analysis (EDX), elemental analysis, thermal decomposition gas chromatograph mass spectrometer (thermal decomposition GC/MS), or the like. In particular, after the confirmation of the presence of the (meth)acrylate monomer having a hydroxyl group by pyrolysis GC/MS, the content of the (meth)acrylate monomer having a hydroxyl group can be determined by ¹³C-NMR (the organic resin component and an appropriate amount of a solvent (deuterated chloroform) are filled into a sample tube for solid NMR, followed by measurement in DD/MAS method after the mixture was allowed to stand overnight).

In order to adjust the glass transition temperature to a predetermined temperature, or to improve the chemical resistance to a chain carbonate included in the nonaqueous electrolytic solution of the secondary battery, the particles A can contain a styrene-based compound such as styrene, α-methylstyrene, para-methylstyrene, t-butylstyrene, chlorostyrene, chloromethylstyrene, or hydroxymethylstyrene, an olefin-based compound such as ethylene or propylene, a diene-based compound such as butadiene or isoprene, an amide-based compound such as acrylamide, or the like. Among them, one kind thereof may be used singly or two or more kinds thereof may be used in combination at an any ratio.

There is no particular limitation on the method of polymerizing a component of the particles A: a homopolymer that includes a fluorine-containing (meth)acrylate monomer; a homopolymer that includes a monomer having two or more reactive groups per molecule; or a copolymer that includes a fluorine-containing (meth)acrylate monomer and a monomer having two or more reactive groups per molecule, and any method such as a solution polymerization method, a suspension polymerization method, a bulk polymerization method, or an emulsion polymerization method may be used. As the polymerization method, for example, such methods as ion polymerization, radical polymerization, or living radical polymerization may be used. The polymerization produces an aqueous solution in which the particles A are dispersed in an aqueous solvent. The aqueous solution thus obtained may be used as it is, or the particles A may be separated from the aqueous solution and used. It is preferable that the organic resin optionally contains a monomer included in a specific monomer group, and when the organic resin is a copolymer, it is possible to suppress the swelling property of the resin in an electrolytic solution and improve adhesive strength.

Examples of the emulsifier used in the polymerization include a cationic surfactant, an anionic surfactant, a nonionic surfactant, and an amphoteric surfactant. Among them, one kind thereof may be used singly, or two or more kinds thereof may be used in combination.

Examples of the cationic surfactant include alkylpyridinium chloride, alkyltrimethylammonium chloride, dialkyldimethylammonium chloride, and alkyldimethylbenzylammonium chloride.

Examples of the anionic surfactant include alkyl sulfate sodium salt, alkyl benzene sulfonate sodium salt, succinic acid dialkyl ester sulfonate sodium salt, alkyl diphenyl ether disulfonate sodium salt, polyoxyethylene alkyl ether sulfate sodium salt, and polyoxyethylene alkyl phenyl ether sulfate sodium salt. Among them, sodium lauryl sulfate, sodium dodecylbenzene sulfonate, sodium polyoxyethylene alkyl ether sulfate, sodium lauryl sulfate, and the like are preferable.

Examples of the nonionic surfactant include polyoxyethylene alkyl ether, polyoxyethylene alkyl aryl ether, polyoxyethylene fatty acid ester, and polyoxyethylene sorbitan fatty acid ester. In general, polyoxyethylene nonylphenyl ether, polyoxyethylene octylphenyl ether, or the like is used.

Examples of the amphoteric surfactant include lauryl betaine, hydroxyethylimidazoline sulfate sodium salt, and imidazoline sulfonate sodium salt.

With respect to the emulsifier, there can also be used a fluorine-based surfactant such as a perfluoroalkyl carboxylate, a perfluoroalkyl sulfonate, a perfluoroalkyl phosphate, a perfluoroalkyl polyoxyethylene, a perfluoroalkyl betaine, or ammonium perfluoroalkoxyfluorocarboxylate.

Furthermore, emulsifiers copolymerizable with a fluorine-containing (meth)acrylate monomer, so-called reactive emulsifiers, such as styrenesulfonic acid sodium salt, allylalkylsulfonic acid sodium salt, polyoxyethylenealkylallylphenyl ether ammonium sulfate salt, or polyoxyethylenealkylallylphenyl ether can be used, and in particular, it is preferable to use a combination of 2-(1-allyl)-4-nonylphenoxy polyethylene glycol sulfate ammonium salt and 2-(1-allyl)-4-nonylphenoxy polyethylene glycol.

The amount of the emulsifier to be used is preferably 0.05% by mass or more and 10% by mass or less, based on 100% by mass of the total amount of the fluorine-containing (meth)acrylate monomer, the monomer having two or more reactive groups per molecule, and the specific monomer group.

With respect to polymerization initiators, there can be used water-soluble polymerization initiators such as sodium persulfate, potassium persulfate, ammonium persulfate, and hydrogen peroxide, or redox-based polymerization initiators obtained by combining these water-soluble polymerization initiators and reducing agents. Among them, potassium persulfate and ammonium persulfate are preferable. Examples of the reducing agent include sodium pyrobisulfite, sodium bisulfite, sodium sulfite, sodium thiosulfate, L-ascorbic acid, or a salt thereof, sodium formaldehyde sulfoxylate, ferrous sulfate, glucose. Among them, L-ascorbic acid or a salt thereof is preferable.

The amount of the polymerization initiator used is preferably 0.1% by mass or more and 3% by mass or less, based on 100% by mass of the total amount of the fluorine-containing (meth)acrylate monomer, the monomer having two or more reactive groups per molecule, and the specific monomer group.

The particles A in the present specification includes: those partially formed into a film and fused with surrounding particles and a binder; besides those having a particle shape. The shape of the particle is not particularly limited, and it may be any of a spherical shape, a polygonal shape, a flat shape, a fibrous shape, and the like.

The average particle size of the particles A is preferably 0.01 µm or more. The average particle size is more preferably 0.05 µm or more, still more preferably 0.08 µm or more. The average particle size is preferably 5 µm or less, more preferably 1 µm or less, still more preferably 0.5 µm or less, and most preferably 0.3 µm or less. When the average particle size is 0.01 µm or more, a porous structure is formed, and battery properties are improved. When the thickness is 5 µm or less, the thickness of the porous layer becomes appropriate, and deterioration of battery properties can be suppressed.

The average particle size of the particles A can be measured by using the following method. Using a field emission scanning electron microscope (S-3400N manufactured by Hitachi, Ltd.), there are produced an image of the surface of the porous layer at a magnification of 30,000 times and an EDX image of elements only contained in inorganic particles of the porous layer that includes the inorganic particles and organic resin particles. The image size is 4.0 µm × 3.0 µm, the number of pixels is 1,280 pixels × 1,024 pixels, and the size of one pixel is 3.1 nm × 2.9 nm. Particles other than the inorganic particles in the obtained EDX image are regarded as particles A. When they cannot be visually distinguished, particles identified by elemental analysis to contain a fluorine element are regarded as particles A. On the image, there was drawn a square or a rectangle that has a smallest area completely surrounding one particle, that is, there was drawn a square or a rectangle whose four sides were in contact with the periphery of a particle, when a square was drawn, the length of its one side was defined as the particle size, and when a rectangle was drawn, the length of its long side was defined as the particle size (major axis diameter), the particle sizes of all particles A on the image were measured, and the arithmetic average value thereof was defined as the average particle size. Note that in a case where the number of the observed particles was less than 50 in the image taken, the particles A were measured in such a way that multiple images were taken so the total number of all the particles A included in the multiple images as to be at least 50, and the arithmetic average value thereof was defined as the average particle size.

The particles A are preferably organic resin particles containing no inorganic components from the viewpoint of adhesiveness to electrodes. When the particles A are organic resin particles, stronger adhesiveness to electrodes may be provided.

The glass transition temperature of the particles A is preferably -30°C or higher. The glass transition temperature is more preferably 10°C or higher, still more preferably 20°C or higher, and most preferably 35°C or higher. The glass transition temperature is preferably 100°C or lower, more preferably 80°C or lower, still more preferably 70°C or lower, and most preferably 60°C or lower. When the glass transition temperature is -30°C or higher, the swelling property of the particles A in an electrolytic solution is suppressed and battery properties are improved. When the glass transition temperature is 100°C or lower, adhesiveness to electrodes is excellent. In order to limit the glass transition temperature within an appropriate range, the particles A can be appropriately selected from a specific monomer group.

### (Particles B)

In the present invention, the porous layer preferably contains particles B. The particles B are inorganic particles, and when the porous layer includes the inorganic particles, thermal dimensional stability can be provided and short circuits due to foreign materials can be suppressed.

Specific examples of the inorganic particles include inorganic oxide particles such as aluminum oxide, boehmite, silica, titanium oxide, zirconium oxide, iron oxide, and magnesium oxide; inorganic nitride particles such as aluminum nitride and silicon nitride; and hardly soluble ion crystal particles such as calcium fluoride, barium fluoride, and barium sulfate. Among the particles B, aluminum oxide having an effect of increasing strength, boehmite and barium sulfate having an effect of reducing parts wear in the step of dispersing the particles A and B are particularly preferable. Furthermore, these particles may be used singly or in combination of two or more kinds thereof.

The average particle size of the inorganic particles to be used is preferably 0.05 µm or more. The average particle size is more preferably 0.10 µm or more, still more preferably 0.20 µm or more. The average particle size is preferably 5.0 µm or less. The average particle size is more preferably 3.0 µm or less, still more preferably 1.0 µm or less. When the average particle size is 0.05 µm or more, the air permeation resistance can be suppressed from being increased, so that battery properties are improved. In addition, the pore diameter is decreased, whereby the impregnation property of the electrolytic solution is lowered and may affect the productivity. When the thickness is 5.0 µm or less, the thickness of the porous layer becomes appropriate, and deterioration of battery properties can be suppressed as well as a sufficient thermal dimensional stability can be obtained.

The average particle size of the particles B was obtained by measurement by using the following method. Using a field emission scanning electron microscope (S-3400N manufactured by Hitachi, Ltd.), there were produced an image of the surface of the porous layer at a magnification of 30,000 times and an EDX image of an element contained only in the particles B (inorganic particles) in the porous layer including the inorganic particles and organic resin particles. The image size obtained in this observation is 4.0 µm × 3.0 µm. Note that the number of pixels was 1,280 pixels × 1,024 pixels, and the size of one pixel was 3.1 nm × 2.9 nm. Next, there was drawn a square or a rectangle that has a smallest area completely surrounding one particle out of the particles B (inorganic particles) identified from the EDX image, that is, there was drawn a square or a rectangle whose four sides were in contact with the periphery of a particle, when a square was drawn, the length of its one side was defined as the particle size, and when a rectangle was drawn, the length of its long side was defined as the particle size (major axis diameter), the particle sizes of all particles B on the image were measured, and the arithmetic average value thereof was defined as the average particle size. Note that in a case where the number of the observed particles was less than 50 in the image taken, the particles B were measured in such a way that multiple images were taken so the total number of all the particles B included in the multiple images as to be at least 50, and the arithmetic average value thereof was defined as the average particle size.

Examples of the shape of the particles to be used include a spherical shape, a plate shape, a needle shape, a rod shape, and an elliptical shape, and particles in any shape may be used. Among them, the spherical shape is preferable from the viewpoint of surface modification property, dispersibility, and coating properties.

### (Binder)

The porous layer of the present invention may contain a binder in order to bring the particles A and the particles B included in the porous layer into close contact with each other and to bring these particles into close contact with the porous substrate. The binder is preferably a resin that is electrochemically stable in the use range of the battery. Examples of the binder include a binder soluble in an organic solvent, a water-soluble binder, and an emulsion binder, and it may be used alone or in combination thereof.

In a case where a binder soluble in an organic solvent and a water-soluble binder are used, the viscosity of the binder itself is preferably 10,000 mPa·s or less at a concentration of 15% by mass. The viscosity is more preferably 8000 mPa·s or less, still more preferably 5000 mPa·s or less. When the concentration is 15% by mass and the viscosity is 10,000 mPa·s or less, an increase in the viscosity of the coating agent can be suppressed, and the particles A are unevenly distributed to the surface, thereby improving the adhesiveness to electrodes.

In addition, in the case of using an emulsion binder, examples of dispersant include water and an organic solvent, for example, an alcohol-based solvent such as ethanol, and a ketone-based solvent such as acetone. An aqueous dispersion system is preferable from the viewpoint of handling and miscibility with other components. The particle size of the emulsion binder is from 30 to 1000 nm, preferably from 50 to 500 nm, more preferably from 70 to 400 nm, and still more preferably from 80 to 300 nm. When the particle size of the emulsion binder is 30 nm or more, an increase in air permeation resistance can be suppressed, and battery properties are improved. When the particle size is 1000 nm or less, sufficient adhesiveness between the porous layer and the porous substrate can be obtained.

Examples of resins used for the binder include resins such as polyamide, polyamideimide, polyimide, polyetherimide, polyvinylidene fluoride, vinylidene fluoride-hexafluoropropylene copolymer, polytetrafluoroethylene, polysulfone, polyketone, polyether ketone, polycarbonate, polyacetal, polyvinyl alcohol, polyethylene glycol, cellulose ether, acrylic resin, polyethylene, polypropylene, polystyrene, and urethane. These resins may be used singly, or in combination of two or more kinds thereof as necessary.

The amount of the water-soluble binder used is preferably 0.5% by mass or more based on the total amount of the particles A and the particles B. The amount is more preferably 1% by mass or more, still more preferably 1.5% by mass or more. The content is preferably 10% by mass or less. The amount is more preferably 8% by mass or less, still more preferably 6% by mass or less. When the amount of the water-soluble binder added is 0.5% by mass or more, sufficient adhesiveness between the porous layer and the porous substrate can be produced. When the content is 10% by mass or less, an increase in air permeation resistance can be suppressed, and battery properties are improved.

The addition amount in the case of using the emulsion binder is preferably 1% by mass or more based on the total amount of the particles A and the particles **B.** The addition amount is more preferably 5% by mass or more, still more preferably 7.5% by mass or more. The addition amount is preferably 30% by mass or less, more preferably 25% by mass or less, and still more preferably 20% by mass or less. When the addition amount of the emulsion-based binder is 1% by mass or more, sufficient adhesiveness between the porous layer and the porous substrate can be obtained. When the addition amount is 30% by mass or less, an increase in air permeation resistance can be suppressed, and battery properties are improved. In particular, when the addition amount is 7.5% by mass or more and 20% by mass or less, the emulsion binder interacts with the particles **A,** and adhesiveness to electrodes is improved, as well as the adhesiveness to the particles A and the particle B and adhesiveness of these particles to the base material are promoted.

### (Formation of porous layer)

The porous film of the present invention is a porous film in which a porous layer containing particles A is disposed on at least one surface of a porous substrate, wherein the particles A includes a mixture containing a polymer that includes a fluorine-containing (meth)acrylate monomer and a polymer that includes a monomer having two or more reactive groups per molecule, or the particles A includes a copolymer containing a fluorine-containing (meth)acrylate monomer and a monomer having two or more reactive groups per molecule, and the content of the monomer having two or more reactive groups per molecule is more than 10% by mass and 30% by mass or less where all components of the particles A are assumed to constitute 100% by mass. When a porous film is formed in such a way, a low-cost porous film having excellent thermal dimensional stability and adhesiveness to electrodes and excellent battery properties can be produced, and a method of producing the porous layer will be described below.

The porous layer contains particles A, and can optionally contain particles B. The porous layer preferably contains 2% by mass or more of the particles A where all components of the porous layer are assumed to constitute 100% by mass. In addition, the particles A content is preferably 30% by mass or less. The particles A content is more preferably 4% by mass or more. The particles A content is more preferably 20% by mass or less, still more preferably 6% by mass or more and 15% by mass or less. When the particles A content in the porous layer is 2% by mass or more, sufficient adhesiveness to electrodes can be obtained. When the particles A content in the porous layer is 30% by mass or less, sufficient thermal dimensional stability can be obtained. The particles A content in the porous layer may be measured by a known method. For example, first, the porous layer is detached from the porous film with water and an organic solvent such as an alcohol, and water and the organic solvent such as an alcohol are sufficiently dried thereby obtaining components contained in the porous layer. After measuring the mass of the total amount of the obtained components, an organic solvent that dissolves the organic resin component is added to the obtained components thereby dissolving only the organic resin component. Subsequently, the organic solvent is dried and removed from the solution in which the organic resin component is dissolved, thereby extracting only the organic resin component. Using the obtained organic resin component, the mass of only the particles A is measured by methods such as nuclear magnetic resonance (¹H-NMR, ¹⁹F-NMR), infrared absorption spectroscopy (IR), X-ray photoelectron spectroscopy (XPS), X-ray fluorescence analysis (EDX), gas chromatographic mass spectrometry, matrix-assisted laser desorption ionization time-of-flight mass spectrometry (MALDI-TOF-MS), or elemental analysis. The particles A content in the porous layer can be calculated from the formula: (mass of particles A/mass of total amount of components) × 100.

The particles A and the particle B included in the porous layer are dispersed at a predetermined concentration thereby preparing an aqueous dispersion coating liquid. The aqueous dispersion coating liquid is prepared by dispersing the particles A and the particles B in a solvent. As the solvent for the aqueous dispersion coating liquid, at least water is used, and a solvent other than water may be further added. The solvent other than water is not particularly limited as long as it is a solvent in which the particles A and the particle B can be dispersed in a solid state and not be dissolved. Examples the solvent other than water include organic solvents such as methanol, ethanol, 2-propanol, acetone, tetrahydrofuran, methyl ethyl ketone, ethyl acetate, N-methylpyrrolidone, dimethylacetamide, dimethylformamide, and dimethylformamide. From lower environmental load, safety, and economic standpoints, it is preferable to use water or a mixture of water and an alcohol.

In addition, the coating liquid may be added with a binder, a film formation aid, a dispersant, a thickener, a stabilizer, an antifoaming agent, a leveling agent, an electrode adhesiveness aid, and the like, as necessary. The film formation aid is added to adjust the film-forming property of the particles A and to improve the adhesiveness to the porous substrate, and specific examples thereof include propylene glycol, diethylene glycol, ethylene glycol, butyl cellosolve acetate, butyl cellosolve, cellosolve acetate, and texanol. These film formation aids may be used singly or in combination of two or more, as necessary. The amount of the film formation aid added is preferably 0.1% by mass or more and 10% by mass or less, more preferably 1% by mass or more and 8% by mass or less, and still more preferably 2% by mass or more and 6% by mass or less based on the total amount of the coating fluid. When the addition amount is 0.1 mass or more, sufficient film-forming properties can be provided, and when the content is 10% by mass or less, the porous substrate can be prevented from being impregnated with the coating liquid when the porous substrate is coated with the coating liquid, so that the productivity can be improved.

The porous layer can contain a fluorine-free organic particle C. That is, the organic particle C may be added as an electrode adhesiveness promoter and as a substrate adhesiveness promoter. When the organic particle C is added, the organic particle C interacts with the particles A, and some of the organic particles C are unevenly distributed to the surface, so that adhesiveness between the porous layer and the electrode may be improved. When the organic particles B present at the interface between the porous layer and the porous substrate, there may be a case where the base material adhesiveness is improved. The resin used for the organic resin C is a fluorine-free resin, and examples thereof include acrylic resins, polyethylene, polypropylene, polystyrene, and urethane. From the viewpoints of adhesiveness to electrodes and of adhesiveness to the porous substrate, it is preferable to use an acrylic resin, polyethylene, or polypropylene. The melting point of the organic particle C is preferably 10°C or higher. The glass transition temperature is more preferably 20°C or higher, still more preferably 30°C or higher, and most preferably 40°C or higher. The glass transition temperature is preferably 100°C or lower. The glass transition temperature is more preferably 90°C or lower, still more preferably 80°C or lower, and most preferably 70°C or lower. When the melting point is 10°C or higher, swelling property in an electrolytic solution can be suppressed, and battery properties are improved. When the glass transition temperature is 100°C or lower, sufficient adhesiveness to electrodes is obtained, and adhesiveness to the porous substrate is obtained.

The addition amount of the organic particles C is preferably 0.1% by mass or more based on the total amount of the particles A and the particles B. The addition amount is more preferably 0.3% by mass or more, still more preferably 0.5% by mass or more. The addition amount is preferably 30% by mass or less, more preferably 25% by mass or less, and still more preferably 20% by mass or less. When the addition amount of the organic particles C is 0.1% by mass or more, sufficient adhesiveness to electrodes is obtained, and sufficient adhesiveness between the porous layer and the porous substrate is obtained. When the content is 10% by mass or less, an increase in air permeation resistance can be suppressed, and battery properties are improved.

The particle size of the organic particle C is preferably 10 nm or more. The particle size is more preferably 30 nm or more, still more preferably 50 nm or more, and most preferably 100 nm or more. The particle size is preferably 500 nm or less, more preferably 400 nm or less, still more preferably 300 nm or less, and most preferably 250 nm or less. When the particle size of the organic particles C is 10 nm or more, an increase in air permeation resistance can be suppressed, and battery properties are improved. When the particle size is 500 nm or less, the particles are unevenly distributed to the surface, and sufficient adhesiveness is obtained.

The organic particles C in the present specification includes: those partially formed into a film and fused with a peripheral particles and a binder; besides those having a particle shape. The shape of the particle is not particularly limited, and it may be any of a spherical shape, a polygonal shape, a flat shape, a fibrous shape, and the like.

As a method of dispersing the coating fluid, a known method may be used. Examples thereof include a ball mill, a bead mill, a Sandoz mill, a roll mill, a homogenizer, an ultrasonic homogenizer, a high-pressure homogenizer, an ultrasonic device, and a paint shaker. A plurality of these mixing and dispersing machines may be used in combination to perform the dispersion stepwise.

Next, the obtained coating liquid is coated onto the porous substrate, and dried to dispose the porous layer. Regarding coating method, coating may be performed by a known method. For example, dip coating, gravure coating, slit die coating, knife coating, comma coating, kiss coating, roll coating, bar coating, spray coating, dip coating, spin coating, screen printing, inkjet printing, pad printing, other types of printing, and the like can be utilized. The coating method is not limited thereto, and the coating method may be selected to fit preferable conditions of the particles A, the particles B, a binder, a dispersant, a leveling agent, a solvent to be used, a substrate, and the like to be used. The porous substrate may be subjected to a surface treatment such as corona treatment or plasma treatment in order to improve the coating property of the coating surface. The porous layer should be disposed on at least one surface of the porous substrate, but it is preferable that the porous layer is disposed on both surfaces of the porous layer in order to develop sufficient adhesiveness to electrodes.

The porous layer can be coated with the particles B to dispose the heat resistant layer, and then the particles A can be coated thereon to dispose the adhesive layer, but multiple coating steps are required in this process, which results in a high expenses, and the entire surface of the porous layer is coated with the particles A, which may lead to blocking between the adhesive layers. Furthermore, there is also a possibility of deteriorating the removability from the core after winding in the manufacturing of the secondary battery. In addition, a large amount of binder is needed to be added in order to produce close contact between the particles B each other and to bring the particles B into close contact with the porous substrate, and there is a possibility that battery properties are deteriorated, which is not preferable. In contrast, the particles A and the particles B are mixed in advance to prepare a single coating liquid and the porous layer is coated with this single coating liquid, thereby reducing cost, and both the particles A and the particles B are allowed to present on the surface of the porous layer, so that the blocking resistance and the removability can also be improved. In addition, the particles A also play a role of a binder, so that the amount of the binder to be added can also be reduced, and excellent battery properties can be achieved. For these reasons, it is preferable that the particles A and the particles B are mixed in advance to prepare a single coating liquid, and the porous layer is coated with this single coating liquid.

The particle B content in the porous layer is preferably 60% by mass or more based on 100% by mass of the entire porous layer. The content is more preferably 65% by mass or more, still more preferably 70% by mass or more. The content is preferably 95% by mass or less, more preferably 90% by mass or less, and still more preferably 85% by mass or less. When the particle B content in the porous layer is 60% by mass or more, sufficient thermal dimensional stability can be provided. When the particle B content in the porous layer is 95% by mass or less, the particles A content becomes sufficient, and adhesiveness to electrodes is provided. The particle B content in the porous layer may be measured by a known method, and for example, first, the porous layer is detached from the porous film with water and an organic solvent such as an alcohol, and water and the organic solvent such as an alcohol are sufficiently dried to give components contained in the porous layer. After measuring the mass of the total amount of the obtained components, the components are combusted at a high temperature at which the organic resin component melts and decomposes, whereby the mass of only the particles B as the inorganic component is measured. The particle B content in the porous layer can be calculated from the formula: (mass of the particle B/mass of the total amount of the components) × 100.

The film thickness of the porous layer is preferably 1.0 µm or more. The film thickness is more preferably 2.0 µm or more, still more preferably 2.5 µm or more, and most preferably 4.0 µm or more. The film thickness is preferably 10.0 µm or less. The film thickness is more preferably 8.0 µm or less, still more preferably 7.0 µm or less. The thickness of the porous layer as used herein refers to the thickness of the porous layer for a porous film including porous substrate on whose one surface having a porous layer disposed, and refers to the sum of the thicknesses of two porous layers for a porous film including porous substrate on whose both surface having a porous layer disposed. When the film thickness of the porous layer is 1.0 µm or more, sufficient thermal dimensional stability and adhesiveness to electrodes can be provided. When the thickness is 10.0 µm or less, a porous structure is formed, and battery properties are improved. It may also be advantageous in terms of cost.

In the porous film of the present invention, after immersion at 25°C for 24 hours in a solvent including at least one of dimethyl carbonate, ethyl methyl carbonate, and diethyl carbonate, the air permeation resistance is preferably 1.0 time or more larger than the air permeation resistance before immersion. The change ratio of the air permeation resistance between before and after the immersion is preferably 3.0 times or less. The change ratio of the air permeation resistance between before and after the immersion is more preferably 2.5 times or less, and still more preferably 2.0 times or less. The change ratio of the air permeation resistance between before and after the immersion of 1.0 or more means that the porous layer of the porous film swells in the solvent, and therefore adhesiveness to electrodes is achieved. When change ratio of the air permeation resistance between before and after the immersion is 3.0 times or less, it is possible to suppress a decrease in ion permeability due to swelling. The type of the solvent to be immersed includes dimethyl carbonate, ethyl methyl carbonate, and diethyl carbonate, which are chain carbonates included in the nonaqueous electrolytic solution of the secondary battery. One kind thereof may be used singly, or two or more kinds thereof may be combined according to an application. Further, they may be combined with a cyclic carbonate such as propylene carbonate, ethylene carbonate, or butylene carbonate. In that case, the volume ratio of the chain carbonate of dimethyl carbonate, ethyl methyl carbonate, and diethyl carbonate is preferably 20% or more. The volume ratio is further preferably 35% or more, and more preferably 50% or more. When the volume ratio is 20% or more, both the swelling property of the porous layer and the battery properties can be achieved.

### [Porous substrate]

In the present invention, the porous substrate refers to a substrate having pores therein. In the present invention, examples of the porous substrate include a porous membrane having pores therein, a nonwoven fabric, and a porous membrane sheet made of a fibrous material. The material included in the porous substrate is preferably made from a resin that is electrically insulative, electrically stable, and also stable in an electrolytic solution. The resin to be used in view of imparting a shutdown function is preferably a thermoplastic resin having a melting point of 200°C or lower. The shutdown function used here is a function of melting with heat to close the porous structure thereby hindering ion movement to stop discharging at the time of abnormal heat generation in the lithium ion battery.

Examples of the thermoplastic resin include polyolefin-based resins, and the porous substrate is preferably a polyolefin-based porous substrate. The polyolefin-based porous substrate is more preferably a polyolefin-based porous substrate having a melting point of 200°C or lower. Specific examples of the polyolefin-based resin include polyethylene, polypropylene, an ethylenepropylene copolymer, a mixture of these, and examples thereof include a single-layered porous substrate containing 90% by mass or more of polyethylene, a multilayered porous substrate that includes polyethylene and polypropylene.

Examples of the method of producing a porous substrate include a method in which a polyolefin-based resin is formed into a sheet and then stretched to make the sheet porous, and a method in which a polyolefin-based resin is dissolved in a solvent such as liquid paraffin to form a sheet and then a solvent is extracted to make the sheet porous.

The thickness of the porous substrate is preferably 3 µm or more and 50 µm or less, more preferably 5 µm or more and 30 µm or less. When the thickness of the porous substrate is 50 µm or less, there can be suppressed an increase in internal resistance of the porous substrate. When the thickness of the porous substrate is 3 µm or more, the porous substrate can be produced, and sufficient mechanical characteristics can be obtained.

The thickness of the porous substrate can be measured by an observation of its cross section with a microscope. When the porous layer is disposed on the porous substrate, the vertical distance from the first interface between the porous substrate and the porous layer to the second interface between the porous substrate and the porous layer is measured as the thickness of the porous substrate. Five sample sheets were prepared by cutting out in a size of 100 mm × 100 mm, the central portion of each of the 5 sheets was observed and measured, and the average value thereof was defined as the thickness of the porous substrate.

The air permeation resistance of the porous substrate is preferably 50 seconds/100 cc or more and 1,000 seconds/100 cc or less. The air permeation resistance is more preferably 50 seconds/100 cc or more and 500 seconds/100 cc or less. Sufficient dynamic characteristics can be achieved when the air permeation resistance is 50 seconds/100 cc or more. When the air permeation resistance is 1,000 seconds/100 cc or less, sufficient ion mobility is produced, and battery properties are improved.

### [Secondary battery]

The porous film of the present invention can be suitably used for a separator for secondary battery such as a lithium ion battery. Lithium ion batteries have a configuration in which a secondary battery separator and an electrolyte are interposed between a positive electrode in which a positive electrode active material is layered on a positive electrode current collector and a negative electrode in which a negative electrode active material is layered on a negative electrode current collector.

The positive electrode is a layered body in which a positive electrode material, which includes an active material, a binder resin, and a conductivity aid, is layered on a current collector, and examples of the active material include lithium-containing transition metal oxides having a layered structure such as LiCoO₂, LiNiO₂, and Li(NiCoMn)O₂, spinel-type manganese oxides such as LiMn₂O₄, and iron-based compounds such as LiFePO₄. As the binder resin, a resin having high oxidation resistance should be used. Specific examples thereof include fluororesins, acrylic resins, and styrene-butadiene resins. As the conductivity aid, carbon materials such as carbon black and graphite are used. As the current collector, a metal foil is suitable, and in particular, an aluminum foil is often used.

The negative electrode is a layered body in which a negative electrode material, which includes an active material and a binder resin, is layered on a current collector, and examples of the active material include carbon materials such as artificial graphite, natural graphite, hard carbon, and soft carbon, lithium alloy-based materials such as tin and silicon, metal materials such as Li, and lithium titanate (Li₄Ti₅O₁₂). Examples of binder resins used include a fluororesin, an acrylic resin, and a styrene-butadiene resin. As the current collector, a metal foil is suitable, and in particular, a copper foil is often used.

The electrolytic solution is a place where ions migrate between the positive electrode and the negative electrode in the secondary battery, and has a configuration in which an electrolyte is dissolved in an organic solvent. Examples of the electrolyte include LiPF₆, LiBF₄, and LiClO₄, and LiPF₆ is suitably used from the viewpoint of solubility in an organic solvent and ionic conductivity. Examples of the organic solvent include ethylene carbonate, propylene carbonate, fluoroethylene carbonate, dimethyl carbonate, diethyl carbonate, ethyl methyl carbonate. These organic solvents may be used in mixture of two or more kinds thereof.

As a method of producing a secondary battery, first, an active material and a conductivity aid are dispersed in a solution of a binder resin to prepare a coating liquid for an electrode, this coating liquid is coated onto a current collector, and a solvent is dried and removed thereby obtaining each of positive electrode and negative electrode. The thickness of the coating film after drying is preferably 50 µm or more and 500 µm or less. A secondary battery separator is disposed between the obtained positive electrode and negative electrode so as to be in contact with an active material layer of each electrode, then enclosed in an exterior material such as an aluminum laminate film, into which an electrolytic solution is injected, thereafter a negative electrode lead and a safety valve are installed, followed by sealing of the exterior material. The secondary battery thus obtained has high adhesiveness between the electrode and the secondary battery separator, has excellent battery properties, and can be manufactured at low cost.

### Examples

Hereinafter, the present invention will be specifically described with reference to Examples, but the present invention is not limited thereto in any way. The measurement method used in this example is shown below.

### [Measurement method]

### (1) Air permeation resistance

The central portion of a sample having a size of 100 mm × 100 mm was measured in accordance with JIS P 8117 (2009) using an Oken Type Air permeation resistance tester (EG01-5-1-MR manufactured by ASAHI SEIKO CO., LTD). The above measurement was performed on 3 samples, the measured values were averaged, and the average value was defined as the air permeation resistance (sec/100 cc).

### (2) Film thickness of porous layer

A sample was cut out with a microtome to create its cross section, and the cross section was observed with a field emission scanning electron microscope (S-800 manufactured by Hitachi, Ltd**.**, acceleration voltage 26 kV). The largest distance between the outer surface of the porous layer and the interface with the porous substrate was defined as the thickness, and the thickness of the porous layer on one side was measured in the case of one side layer, and the thicknesses of the porous layers on both sides were measured and the sum of both layer thicknesses was regarded as the thickness in the case of both side later. A central portion of a sample having a size of 100 mm × 100 mm was measured. The above measurement was performed on five samples, and the measured values were averaged.

### (3) Particle B content in porous layer

The porous layer was detached from the 10 cm × 10 cm porous film with 40 g of water, and water and an organic solvent such as an alcohol was sufficiently dried to give components contained in the porous layer. After measuring the mass of the total amount of the obtained components, the components were combusted at a high temperature at which the organic resin component was melted and decomposed, and the mass of only the inorganic particles was measured. The inorganic particle content in the porous layer was calculated in % by mass from the formula: (mass of inorganic particles/mass of total amount of components) × 100.

### (4) Appearance of coating film

A sample having a size of 100 × 200 mm was placed on a black drawing paper, and the appearance of the coating film was observed and evaluated on the basis of the following indexes.
- Very good in coating film appearance: no coating streaks, no coating cissing
- Good in coating film appearance: either coating streaks or coating cissing is slightly observed.
- Acceptable in coating film appearance: coating streaks and coating cissing are slightly observed.
- Poor in coating film appearance: coating streaks and coating cissing were observed, and difficult to evaluate

### (5) Thermal shrinkage (thermal dimensional stability)

From 3 samples of 100 mm × 100 mm size, the length from the midpoint of one side to the midpoint of the opposite side of each sample was measured, and the samples were heat treated in an oven at 150°C for 30 minutes under a tensionless condition. After the heat treatment, the sample was taken out, the length between the midpoints at the same points as before the heat treatment was measured, and the thermal shrinkage was calculated from the following equation. Two points were calculated from one sample at the same time, and the average value of all the numerical values was defined as the thermal shrinkage (thermal dimensional stability). A value of less than 10% was rated very good, a value of 10% or more and less than 20% was rated good, a value of 20% or more and less than 40% was rated as acceptable, and a value of 40% or more was rated poor. Thermal shrinkage (%) = [(length between middle points before heat treatment - length between middle points after heat treatment)/(length between middle points beforeheat treatment)] × 100.

### (6) Adhesiveness to electrodes

A positive electrode having a size of 15 mm × 100 mm, which includes an active material of Li(Ni_{5/10}Mn_{2/10}Co_{3/10})O₂, a binder of a vinylidene fluoride resin, and a conductivity aid of acetylene black and graphite, was placed with a porous film in such a manner that the active material and the porous layer were in contact with each other, and they were hot pressed at 0.5 MPa, 100°C, and 0.2 m/min with a hot roll press machine, followed by manual peeling off using tweezers, thereby evaluating the adhesive strength in the following 4 stages. In the same manner, the adhesive strength between the porous film and the negative electrode, which includes: graphite as an active material; a vinylidene fluoride resin as a binder; and carbon black as a conductivity aid, was also measured, and the average adhesive strength obtained by comprehensive evaluation of respective results of the positive electrode and the negative electrode was determined as the adhesive strength.
- Excellent in adhesive strength: the electrode was peeled off from the porous film only with a very strong force.
- Very good in adhesive strength: the electrode was peeled off from the porous film only with a strong force.

- Good in adhesive strength: the electrode was peeled off from the porous film with a slightly strong force.
- Acceptable in adhesive strength: the electrode was peeled off from the porous film with a weak force.
- Poor in adhesive strength: the electrode was peeled off from the porous film with an extremely weak force.

### (7) Change ratio in air permeation resistance after solvent immersion

Three samples having a size of 100 mm × 100 mm were each immersed at 25°C for 24 hours in 2 g of a solvent including at least one of dimethyl carbonate, ethyl methyl carbonate, and diethyl carbonate. Thereafter, the sample was taken out and dried, followed by measurement of one central portion of each sample in accordance with JIS P 8117 (2009) using an Oken Type Air permeation resistance tester (EG01-5-1-MR manufactured by ASAHI SEIKO CO., LTD.), and the average value thereof was regarded as the air permeation resistance (sec/100 cm³). Using the air permeation resistance obtained in the above (1) and the air permeation resistance after solvent immersion, the change ratio in air permeation resistance after solvent immersion was calculated from the following formula. Change ratio in air permeation resistance after solvent immersion = air permeation resistance after solvent immersion/initial air permeation resistance

### (8) Preparation of battery

By using a planetary mixer, 92 parts by mass of Li(Ni_{5/10}Mn_{2/10}Co_{3/10})O₂ as a positive electrode active material, 2.5 parts by mass of acetylene black and 2.5 parts by mass of graphite as a positive electrode conductivity aid, and 3 parts by mass of polyvinylidene fluoride as a positive electrode binder were dispersed in N-methyl-2-pyrrolidone by using a planetary mixer to prepare a positive electrode slurry, which was coated on an aluminum foil, dried and rolled to prepare a positive electrode sheet (coating weight: 9.5 mg/cm²).

The positive electrode sheet was cut into a size of 40 mm × 40 mm. At this time, the tab bonding portion for current collection, which had no active material layer, was cut out so as to have a size of 5 mm × 5 mm outside of the active material surface. An aluminum tab having a width of 5 mm and a thickness of 0.1 mm was ultrasonically welded to the tab bonding portion.

By using a planetary mixer, 98 parts by mass of natural graphite as a negative electrode active material, 1 part by mass of carboxymethyl cellulose as a thickener, and 1 part by mass of a styrene-butadiene copolymer as a negative electrode binder were dispersed in water to prepare a negative electrode slurry, which was coated on a copper foil, dried and rolled to prepare a negative electrode sheet (application basis weight: 5.5 mg/cm²).

The negative electrode sheet was cut into a size of 45 mm × 45 mm. At this time, the tab bonding portion for current collection, which had no active material layer, was cut out so as to have a size of 5 mm × 5 mm outside of the active material surface. A copper tab having the same size as the positive electrode tab was ultrasonically welded to the tab bonding portion.

Next, the porous film was cut into a size of 55 mm × 55 mm, and the positive electrode and the negative electrode were disposed on both surfaces of the porous film such that the porous film was separated by the active material layer, and the positive electrode coated portion is entirely opposed to the negative electrode coated portion to obtain an electrode group. The positive electrode, the porous film, and the negative electrode were put in one aluminum laminate film of 90 mm × 200 mm, the long side of the aluminum laminate film was folded, and two long sides of the aluminum laminate film were heat-sealed to form a bag-shaped aluminum laminate film.

LiPF₆ as a solute was dissolved in a mixed solvent of ethylene carbonate: diethyl carbonate = 1: 1 (volume ratio) so as to have a concentration of 1 mol/liter, and thus the electrolytic solution was prepared and used. Into the bag-shaped aluminum laminate film was injected 1.5 g of the electrolytic solution and was impregnated under reduced pressure while the aluminum laminate film was heat-sealed at the short side portion to obtain a laminate type battery.

### (9) Discharge load characteristics

The discharge load characteristics were evaluated according to the following procedure and evaluated in terms of the discharge capacity retention.

Using the laminate type battery described above, the discharge capacity at a discharge rate of 0.5C and the discharge capacity at a discharge rate of 10C were measured at 25°C, and the discharge capacity retention was calculated as (discharge capacity at 10C)/(discharge capacity at 0.5C) × 100. Here, the charge condition was constant current charge at a rate of 0.5C and at 4.3 V, and the discharge condition was constant current discharge at 2.7 V. Five samples of the laminate type batteries were prepared, the results of the maximum and minimum discharge capacity retention were excluded, and the remaining three measurement results were averaged and the averaged value was regarded as the capacity retention. A discharge capacity retention of less than 55% was rated poor, a discharge capacity retention of 55% or more and less than 60% was rated acceptable, a discharge capacity retention of 60% or more and less than 65% was rated good, a discharge capacity retention of 65% or more and less than 75% was rated very good, and a discharge capacity retention of 75% or more was rated excellent.

### (10) Charge-discharge cycle characteristics

Charge-discharge cycle characteristics of the laminate type battery were tested according to the following procedure, and evaluated in a discharge capacity retention.

### <1st to 300th cycle>

One cycle consisting of charging and discharging was repeated 300 times at 25°C, charging condition was constant current charge at 2C and 4.3 V, and discharging condition was constant current discharge at 2C and 2.7 V.

### <Calculation of discharge capacity retention>

The discharge capacity retention was calculated by (discharge capacity at 300th cycles)/(discharge capacity at 1st cycle) × 100. Five samples of the laminate type batteries were prepared, the results of the maximum and minimum discharge capacity retention were excluded, and the remaining three measurement results were averaged and the averaged value was regarded as the capacity retention. When the discharge capacity retention was less than 60%, the charge/discharge cycle characteristics were rated poor. When the discharge capacity retention was 60% or more and less than 65%, the charge/discharge cycle characteristics were rated acceptable. When the discharge capacity retention was 65% or more and less than 70%, the charge/discharge cycle characteristics were rated good. When the discharge capacity retention was 70% or more and less than 75%, the charge/discharge cycle characteristics were rated very good. When the discharge capacity retention was 75% or more, the charge/discharge cycle characteristics were rated excellent.

### (Example 1)

Into a reactor were charged 120 parts of ion-exchanged water and 1 part of ADEKA REASORB SR-1025 (emulsifier manufactured by ADEKA Corporation), and stirring was started. Into this reactor was added 0.4 parts of 2,2'-azobis(2-(2-imidazoline-2-yl) propane) (manufactured by Wako Pure Chemical Industries, Ltd.) under a nitrogen atmosphere, and thereto was continuously added dropwise at 60°C over 2 hours a mixture including a component of 30 parts of 2,2,2-trifluoroethyl methacrylate (3FMA), 54 parts of cyclohexyl acrylate (CHA), 2 parts of hydroxyethyl methacrylate (HEMA), 14 parts of urethane diacrylate (UF-C052 manufactured by Kyoeisha Chemical Co., Ltd., homopolymer Tg: -44°C), 9 parts of ADEKA REASORB SR-1025 (emulsifier manufactured by ADEKA Corporation) and 115 parts of ion-exchanged water. After the completion of the dropwise addition, the mixture was polymerized over 4 hours to produce a dispersion liquid A containing particles A (average particle size: 171 nm; glass transition temperature: 41°C) that include an organic resin of the copolymer.

Alumina particles (aluminum oxide) having an average particle size of 0.5 µm were used as the particles B, water in the same amount as the particles B as a solvent and carboxymethyl cellulose as a dispersant were added in an amount of 1% by mass with respect to the particles B, and then the mixture was dispersed with a bead mill to prepare a dispersion liquid B.

The dispersion liquid A and the dispersion liquid B were dispersed in water so that the particle B content in the porous layer was 70% by mass, the dispersion liquid A and the dispersion liquid B were mixed with a stirrer, and an acrylic emulsion binder (acrylic particles, 100 nm) was further added as a binder in an amount of 17% by mass with respect to the total amount of the particles A and the particles B thereby preparing a coating liquid.

The obtained coating liquid was coated on both surfaces of a polyethylene porous substrate (thickness: 9 µm; air permeation resistance: 60 sec/100 cc) with a wire bar, and dried in a hot air oven (preset drying temperature: 50°C) until the contained solvent was volatilized to form a porous layer, thereby obtaining the porous film of the present invention. For the obtained porous film, in Table 2 are shown the measurement results of the film thickness, air permeation resistance, coating film appearance, thermal shrinkage (thermal dimensional stability), adhesiveness to electrodes, the change ratio in air permeation resistance after solvent immersion (solvent: diethyl carbonate), discharge load characteristics, and charge/discharge cycle characteristics of the porous layer.

### (Example 2)

A porous film of the present invention was obtained in the same manner as in Example 1 except that the composition ratio of the particles A was changed to the composition shown in Table 1-1. The measurement results of the porous film are shown in Table 2.

### (Example 3)

A porous film of the present invention was obtained in the same manner as in Example 1 except that the monomer having two or more reactive groups per molecule contained in the particles A was alkylene glycol dimethacrylate (PDE-600 manufactured by NOF CORPORATION, homopolymer Tg: - 34°C). The measurement results of the porous film are shown in Table 2.

### (Example 4)

A porous film of the present invention was obtained in the same manner as in Example 3 except that the composition ratio of the particles A was changed to the composition shown in Table 1-1. The measurement results of the porous film are shown in Table 2.

### (Example 5)

A porous film of the present invention was obtained in the same manner as in Example 3 except that the particle B content in the porous layer was 75% by mass. The measurement results of the porous film are shown in Table 2.

### (Example 6)

A porous film of the present invention was obtained in the same manner as in Example 5 except that the organic particles C (Polyethylene (melting point: 80°C) ) were added in an amount of 1.2% by mass with respect to the total amount of the particles A and the particles B. The measurement results of the porous film are shown in Table 2.

### (Example 7)

A porous film of the present invention was obtained in the same manner as in Example 5 except that the organic particles C (Polypropylene (melting point: 60°C) ) were added in an amount of 1.2% by mass with respect to the total amount of the particles A and the particles B. The measurement results of the porous film are shown in Table 2.

### (Example 8)

A porous film of the present invention was obtained in the same manner as in Example 3 except that the particles B were barium sulfate. The measurement results of the porous film are shown in Table 2.

### (Example 9)

A porous film of the present invention was obtained in the same manner as in Example 3 except that the composition ratio of the particles A was changed to the composition shown in Table 1-2. The measurement results of the porous film are shown in Table 2.

### (Example 10)

A porous film of the present invention was obtained in the same manner as in Example 9 except that the particle B content in the porous layer was 75% by mass. The measurement results of the porous film are shown in Table 2.

### (Example 11)

A porous film of the present invention was obtained in the same manner as in Example 1 except that the thickness of the porous layer was 4.0 µm. The measurement results of the porous film are shown in Table 2.

### (Example 12)

A porous film of the present invention was obtained in the same manner as in Example 3 except that the composition ratio of the particles A was changed to the composition shown in Table 1-2. The measurement results of the porous film are shown in Table 2.

### (Example 13)

A porous film of the present invention was obtained in the same manner as in Example 3 except that the composition ratio of the particles A was changed to the composition shown in Table 1-2. The measurement results of the porous film are shown in Table 2.

### (Example 14)

A porous film of the present invention was obtained in the same manner as in Example 3 except that the composition ratio of the particles A was changed to the composition shown in Table 1-2. The measurement results of the porous film are shown in Table 2.

### (Example 15)

A porous film of the present invention was obtained in the same manner as in Example 3 except that the composition ratio of the particles A was changed to the composition shown in Table 1-2. The measurement results of the porous film are shown in Table 2.

### (Example 16)

A porous film of the present invention was obtained in the same manner as in Example 3 except that the composition ratio of the particles A was changed to the composition shown in Table 1-2. The measurement results of the porous film are shown in Table 2.

### (Example 17)

A porous film of the present invention was obtained in the same manner as in Example 3 except that the particle B content in the porous layer was 60% by mass. The measurement results of the porous film are shown in Table 2.

### (Example 18)

A porous film of the present invention was obtained in the same manner as in Example 3 except that the particle B content in the porous layer was 85% by mass. The measurement results of the porous film are shown in Table 2.

### (Example 19)

A porous film of the present invention was obtained in the same manner as in Example 3 except that the composition ratio of the particles A was changed to the composition shown in Table 1-3. The measurement results of the porous film are shown in Table 2.

### (Example 20)

A porous film of the present invention was obtained in the same manner as in Example 3 except that the composition ratio of the particles A was changed to the composition shown in Table 1-3. The measurement results of the porous film are shown in Table 2.

### (Example 21)

A porous film of the present invention was obtained in the same manner as in Example 3 except that the composition ratio of the particles A was changed to the composition shown in Table 1-3. The measurement results of the porous film are shown in Table 2.

### (Example 22)

A porous film of the present invention was obtained in the same manner as in Example 3 except that the binder contained 3% by mass of water-soluble acryl. The measurement results of the porous film are shown in Table 2.

### (Comparative Example 1)

A porous film of the present invention was obtained in the same manner as in Example 3 except that the composition ratio of the particles A was changed to the composition shown in Table 1-3. The measurement results of the porous film are shown in Table 2.

### (Comparative Example 2)

A porous film of the present invention was obtained in the same manner as in Example 1 except that the composition ratio of the particles A was changed to the composition shown in Table 1-3. The measurement results of the porous film are shown in Table 2.

### (Comparative Example 3)

A porous film of the present invention was obtained in the same manner as in Example 1 except that a coating liquid was prepared without using the particles A. The measurement results of the porous film are shown in Table 2.

From Table 1-1, Table 1-2, Table 1-3, and Table 2, all of Example 1 to 22 are porous films in which a porous layer containing particles A is disposed on at least one surface of a porous substrate, the particles A have a copolymer containing fluorine-containing (meth)acrylate monomers and monomers that have two or more reactive groups per molecule, the monomers having two or more reactive groups per molecule are contained in the particles A in an amount ranging from greater than 10% by mass to not more than 30% by mass, where all components of the particles A are assumed to constitute 100% by mass, so that sufficient thermal dimensional stability, adhesiveness to electrodes, and good battery properties are achieved.

In contrast, in Comparative Example 1, the content of the monomer having two or more reactive groups per molecule is 10% by mass or less, whereby sufficient adhesiveness to electrodes cannot be achieved. In Comparative Example 2, the content of the monomer having two or more reactive groups per molecule exceeds 30% by mass, whereby sufficient battery properties cannot be achieved. In Comparative Example 3, the particles A are not added, whereby sufficient adhesiveness to electrodes cannot be achieved.

### [Table 1-1]

**Table 1-1**

| | Particle A | | | | | | | | Particle B | | Organic particle C | Binder |
|---|---|---|---|---|---|---|---|---|---|---|---|---|
| | Fluorine-containing (meth)acrylate monomer | Monomer having two or more reactive groups per molecule | Specified monomer group | The content of fluorine-containing (meth)acrylate monomer (% by mass) | The content of monomer having two or more reactive groups per molecule (% by mass) | The content of (meth)acrylic acid ester monomer having a monocyclic cyclic hydrocarbon group (% by mass) | The content of (meth)acrylic acid ester monomer having a hydroxyl group (% by mass) | Glass transition temperature (°C) | Type | Content (% by mass) | Type | Type |
| Example 1 | 2,2,2-trifluoroethyl methacrylate | urethane diacrylate | acrylic acid ester monomer methacrylic acid ester monomer | 30 | 14 | 54 | 2 | 41 | aluminum oxide | 70 | - | acrylic emulsion binder |
| Example 2 | 2,2,2-trifluoroethyl methacrylate | urethane diacrylate | acrylic acid ester monomer methacrylic acid ester monomer | 30 | 28 | 40 | 2 | 45 | aluminum oxide | 70 | - | acrylic emulsion binder |
| Example 3 | 2,2,2-trifluoroethyl methacrylate | alkylene glycol dimethacrylate | acrylic acid ester monomer methacrylic acid ester monomer | 30 | 14 | 54 | 2 | 45 | aluminum oxide | 70 | - | acrylic emulsion binder |
| Example 4 | 2,2,2-trifluoroethyl methacrylate | alkylene glycol dimethacrylate | acrylic acid ester monomer methacrylic acid ester monomer | 30 | 12 | 56 | 2 | 45 | aluminum oxide | 70 | - | acrylic emulsion binder |
| Example 5 | 2,2,2-trifluoroethyl methacrylate | alkylene glycol dimethacrylate | acrylic acid ester monomer methacrylic acid ester monomer | 30 | 14 | 54 | 2 | 45 | aluminum oxide | 75 | - | acrylic emulsion binder |
| Example 6 | 2,2,2-trifluoroethyl methacrylate | alkylene glycol dimethacrylate | acrylic acid ester monomer methacrylic acid ester monomer | 30 | 14 | 54 | 2 | 45 | aluminum oxide | 75 | polyethylene | acrylic emulsion binder |
| Example 7 | 2,2,2-trifluoroethyl methacrylate | alkylene glycol dimethacrylate | acrylic acid ester monomer methacrylic acid ester monomer | 30 | 14 | 54 | 2 | 45 | aluminum oxide | 75 | polypropylene | acrylic emulsion binder |
| Example 8 | 2,2,2-trifluoroethyl methacrylate | alkylene glycol dimethacrylate | acrylic acid ester monomer methacrylic acid ester monomer | 30 | 14 | 54 | 2 | 45 | barium sulfate | 70 | - | acrylic emulsion binder |

### [Table 1-2]

**Table 1-2**

| | Particle A | | | | | | | | Particle B | | Organic particle C | Binder |
|---|---|---|---|---|---|---|---|---|---|---|---|---|
| | Fluorine-containing (meth)acrylate monomer | Monomer having two or more reactive groups per molecule | Specified monomer group | The content of fluorine-containing (meth)acrylate monomer (% by mass) | The content of monomer having two or more reactive groups per molecule (% by mass) | The content of (meth)acrylic acid ester monomer having a monocyclic cyclic hydrocarbon group (% by mass) | The content of (meth)acrylic acid ester monomer having a hydroxyl group (% by mass) | Glass transition temperature (°C) | Type | Content (% by mass) | Type | Type |
| Example 9 | 2,2,2-trifluoroethyl methacrylate | alkylene glycol dimethacrylate | acrylic acid ester monomer methacrylic acid ester monomer | 30 | 28 | 40 | 2 | 44 | aluminu m oxide | 70 | - | acrylic emulsio n binder |
| Example 10 | 2,2,2-trifluoroethyl methacrylate | alkylene glycol dimethacrylate | acrylic acid ester monomer methacrylic acid ester monomer | 30 | 28 | 40 | 2 | 44 | aluminu m oxide | 75 | - | acrylic emulsio n binder |
| Example 11 | 2,2,2-trifluoroethyl methacrylate | urethane diacrylate | acrylic acid ester monomer methacrylic acid ester monomer | 30 | 14 | 54 | 2 | 41 | aluminu m oxide | 70 | - | acrylic emulsio n binder |
| Example 12 | 2,2,2-trifluoroethyl methacrylate | alkylene glycol dimethacrylate | acrylic acid ester monomer methacrylic acid ester monomer | 30 | 11 | 57 | 2 | 45 | aluminu m oxide | 70 | - | acrylic emulsio n binder |
| Example 13 | 2,2,2-trifluoroethyl methacrylate | glycidyl methacrylate | acrylic acid ester monomer methacrylic acid ester monomer | 30 | 14 | 54 | 2 | 60 | aluminu m oxide | 70 | - | acrylic emulsio n binder |
| Example 14 | 2,2,2-trifluoroethyl methacrylate | alkylene glycol dimethacrylate | acrylic acid ester monomer methacrylic acid ester monomer | 30 | 14 | 55 | 1 | 43 | aluminu m oxide | 70 | - | acrylic emulsio n binder |
| Example 15 | 2,2,2-trifluoroethyl methacrylate | alkylene glycol dimethacrylate | acrylic acid ester monomer methacrylic acid ester monomer | 30 | 14 | 51 | 5 | 40 | aluminu m oxide | 70 | - | acrylic emulsio n binder |
| Example 16 | 2,2,2-trifluoroethyl methacrylate | alkylene glycol dimethacrylate | acrylic acid ester monomer methacrylic acid ester monomer | 24 | 14 | 52 | 10 | 38 | aluminu m oxide | 70 | - | acrylic emulsio n binder |

### [Table 1-3]

**Table 1-3**

| | Particle A | | | | | | | | Particle B | | Organic particle C | Binder |
|---|---|---|---|---|---|---|---|---|---|---|---|---|
| | Fluorine-containing (meth)acrylate monomer | Monomer having two or more reactive groups per molecule | Specified monomer group | The content of fluorine-containing (meth)acrylate monomer (% by mass) | The content of monomer having two or more reactive groups per molecule (% by mass) | The content of (meth)acrylic acid ester monomer having a monocyclic cyclic hydrocarbon group (% by mass) | The content of (meth)acrylic acid ester monomer having a hydroxyl group (% by mass) | Glass transition temperature (°C) | Type | Content (% by mass) | Type | Type |
| Example 17 | 2,2,2-trifluoroethyl methacrylate | alkylene glycol dimethacrylate | acrylic acid ester monomer methacrylic acid ester monomer | 30 | 14 | 54 | 2 | 45 | aluminum oxide | 60 | - | acrylic emulsion binder |
| Example 18 | 2,2,2-trifluoroethyl methacrylate | alkylene glycol dimethacrylate | acrylic acid ester monomer methacrylic acid ester monomer | 30 | 14 | 54 | 2 | 45 | aluminum oxide | 85 | - | acrylic emulsion binder |
| Example 19 | 2,2,2-trifluoroethyl methacrylate | alkylene glycol dimethacrylate | acrylic acid ester monomer methacrylic acid ester monomer | 22 | 14 | 62 | 2 | 44 | aluminum oxide | 70 | - | acrylic emulsion binder |
| Example 20 | 2,2,2-trifluoroethyl methacrylate | alkylene glycol dimethacrylate | acrylic acid ester monomer methacrylic acid ester monomer | 60 | 14 | 24 | 2 | 56 | aluminum oxide | 70 | - | acrylic emulsion binder |
| Example 21 | 2,2,2-trifluoroethyl methacrylate | alkylene glycol dimethacrylate | acrylic acid ester monomer methacrylic acid ester monomer | 30 | 14 | MMA: 31% by mass BA: 23% by mass | 2 | 55 | aluminum oxide | 70 | - | acrylic emulsion binder |
| Example 22 | 2,2,2-trifluoroethyl methacrylate | urethane diacrylate | acrylic acid ester monomer methacrylic acid ester monomer | 30 | 14 | 54 | 2 | 41 | aluminum oxide | 70 | - | water-soluble acryl (3% by mass) |
| Comparative Example 1 | 2,2,2-trifluoroethyl methacrylate | alkylene glycol dimethacrylate | acrylic acid ester monomer methacrylic acid ester monomer | 40 | 2 | 56 | 2 | 52 | aluminum oxide | 70 | - | acrylic emulsion binder |
| Comparative Example 2 | 2,2,2-trifluoroethyl methacrylate | urethane diacrylate | acrylic acid ester monomer methacrylic acid ester monomer | 6 | 64 | 28 | 2 | 6 | aluminum oxide | 70 | - | acrylic emulsion binder |
| Comparative Example 3 | - | - | - | - | - | - | - | - | aluminum oxide | 95 | - | acrylic emulsion binder |

### [Table 2]

**Table 2**

| | Thickness of porous layer (µm) | Air permeation resistance (sec/100cc) | Appearance of coating film | Thermal shrinkage (thermal dimensional stability) | Adhesiveness to electrodes | Air permeation resistance change ratio after immersion into diethyl carbonate (times) | Discharge load characteristics | Charge-discharge cycle characteristics |
|---|---|---|---|---|---|---|---|---|
| Example 1 | 6.0 | 290 | Very good | Very good | Very good | 2.2 | Very good | Very good |
| Example 2 | 6.0 | 350 | Very good | Good | Very good | 2.8 | Good | Good |
| Example 3 | 6.0 | 300 | Very good | Very good | Very good | 2.0 | Very good | Very good |
| Example 4 | 6.0 | 200 | Very good | Very good | Very good | 1.8 | Very good | Very good |
| Example 5 | 6.0 | 225 | Very good | Very good | Very good | 1.7 | Very good | Very good |
| Example 6 | 6.0 | 240 | Very good | Very good | Excellent | 1.8 | Very good | Very good |
| Example 7 | 6.0 | 250 | Very good | Very good | Excellent | 1.9 | Very good | Very good |
| Example 8 | 6.0 | 270 | Very good | Very good | Very good | 2.0 | Very good | Very good |
| Example 9 | 6.0 | 360 | Very good | Good | Very good | 2.5 | Good | Good |
| Example 10 | 6.0 | 250 | Very good | Good | Very good | 2.5 | Good | Good |
| Example 11 | 4.0 | 250 | Very good | Good | Very good | 2.0 | Very good | Very good |
| Example 12 | 6.0 | 300 | Very good | Very good | Very good | 2.1 | Excellent | Excellent |
| Example 13 | 6.0 | 290 | Very good | Very good | Acceptable | 2.5 | Good | Good |
| Example 14 | 6.0 | 300 | Very good | Acceptable | Very good | 1.9 | Excellent | Excellent |
| Example 15 | 6.0 | 300 | Very good | Very good | Very good | 2.4 | Good | Good |
| Example 16 | 6.0 | 280 | Very good | Very good | Excellent | 2.7 | Acceptable | Acceptable |
| Example 17 | 6.0 | 290 | Very good | Very good | Very good | 2.4 | Acceptable | Acceptable |
| Example 18 | 6.0 | 310 | Very good | Very good | Acceptable | 1.9 | Excellent | Excellent |
| Example 19 | 6.0 | 300 | Very good | Very good | Very good | 2.2 | Very good | Very good |
| Example 20 | 6.0 | 310 | Very good | Very good | Acceptable | 2.2 | Very good | Very good |
| Example 21 | 6.0 | 290 | Very good | Very good | Acceptable | 2.2 | Very good | Very good |
| Example 22 | 6.0 | 250 | Very good | Very good | Very good | 2.2 | Good | Good |
| Comparative Example 1 | 6.0 | 130 | Very good | Very good | Poor | 1.0 | Very good | Very good |
| Comparative Example 2 | 6.0 | 800 | Very good | Acceptable | Very good | 7.0 | Poor | Poor |
| Comparative Example 3 | 6.0 | 110 | Very good | Very good | Poor | 1.0 | Very good | Very good |

## Claims

1. A porous film comprising: a porous substrate; and a porous layer on at least one surface of the porous substrate, the porous layer containing particles A, wherein the particles A have a mixture that contains: a polymer that includes a fluorine-containing (meth)acrylate monomer; and a polymer that includes a monomer having two or more reactive groups per molecule, or the particles A have a copolymer that contains: a fluorine-containing (meth)acrylate monomer; and a monomer having two or more reactive groups per molecule, the particles A contain the monomer having two or more reactive groups per molecule in an amount of more than 10% by mass and 30% by mass or less, where all components of the particles A are assumed to constitute 100% by mass.

2. The porous film according to claim 1, wherein the monomer having two or more reactive groups per molecule is a (meth)acrylate having two or more reactive groups per molecule.

3. The porous film according to claim 1 or 2, wherein the monomer having two or more reactive groups per molecule is alkylene glycol di(meth)acrylate or urethane di(meth)acrylate.

4. The porous film according to any one of claims 1 to 3, wherein a homopolymer that includes the monomer having two or more reactive groups per molecule has a glass transition temperature of -50°C or higher and 0°C or lower.

5. The porous film according to any one of claims 1 to 4, wherein the particles A further contain at least one specific monomer selected from the group consisting of an unsaturated carboxylic acid monomer, a (meth)acrylic acid ester monomer, a styrene-based monomer, an olefin-based monomer, a diene-based monomer, and an amide-based monomer, and the particles A contain the monomer in an amount of 20% by mass or more and 80% by mass or less.

6. The porous film according to any one of claims 1 to 5, wherein the copolymer having the fluorine-containing (meth)acrylate monomer and the monomer having two or more reactive groups per molecule is a copolymer further containing at least one specific monomer selected from the group consisting of an unsaturated carboxylic acid monomer, a (meth)acrylic acid ester monomer, a styrene-based monomer, an olefin-based monomer, a diene-based monomer, and an amide-based monomer.

7. The porous film according to claim 5 or 6, wherein at least one of the (meth)acrylic acid ester monomers is a monomer selected from isobornyl (meth)acrylate, dicyclopentanyl (meth)acrylate, dicyclopentenyl (meth)acrylate, cyclohexyl (meth)acrylate, or benzyl (meth)acrylate.

8. The porous film according to claim 5 or 6, wherein at least one of the (meth)acrylic acid ester monomers is a (meth)acrylic acid ester monomer that includes a monocyclic cyclic hydrocarbon group, or is a (meth)acrylic acid ester monomer substituted with one or more alkyl groups.

9. The porous film according to claim 5 or 6, wherein at least one of the (meth)acrylic acid ester monomers is a (meth)acrylic acid ester monomer including a hydroxyl group, and the particles A contain the (meth)acrylic acid ester monomer including a hydroxyl group in an amount of 1% by mass or more and 10% by mass or less.

10. The porous film according to any one of claims 1 to 9, wherein the particles A contain the fluorine-containing (meth)acrylate monomer in an amount of more than 20% by mass and 80% by mass or less.

11. The porous film according to any one of claims 1 to 10, wherein the fluorine-containing (meth)acrylate monomer contains 3 or more and 13 or less fluorine atoms.

12. The porous film according to any one of claims 1 to 11, wherein the particles A have a glass transition temperature of -30°C or higher and 100°C or lower.

13. The porous film according to any one of claims 1 to 12, wherein the porous layer contains particles B including inorganic particles.

14. The porous film according to claim 13, wherein the porous layer contains the particles B in an amount of 60% by mass or more and 95% by mass or less where all components of the porous layer are assumed to constitute 100% by mass.

15. The porous film according to any one of claims 1 to 14, wherein the porous layer contains a fluorine-free organic particle C.

16. A separator for secondary battery, comprising the porous film according to any one of claims 1 to 15.

17. A secondary battery, comprising the separator for secondary battery according to claim 16.

## Patentansprüche

1. Poröse Folie, umfassend: ein poröses Substrat; und eine poröse Schicht auf wenigstens einer Oberfläche des porösen Substrats, wobei die poröse Schicht Partikeln A enthält, wobei die Partikeln A eine Mischung aufweisen, die umfasst: ein Polymer, das ein Fluor-haltiges (Meth)acrylat-Monomer enthält; und ein Polymer, das ein Monomer mit zwei oder mehr reaktiven Gruppen pro Molekül enthält; oder wobei die Partikeln A ein Copolymer aufweisen, das umfasst: ein Fluor-haltiges (Meth)acrylat-Monomer; und ein Monomer mit zwei oder mehr reaktiven Gruppen pro Molekül; wobei die Partikeln A das Monomer mit zwei oder mehr reaktiven Gruppen pro Molekül mit einem Anteil von mehr als 10 Massen-% und 30 Massen-% oder weniger aufweisen; und wobei alle Komponenten der Partikeln A insgesamt 100 Massen-% ausmachen.

2. Poröse Folie nach Anspruch 1, wobei das Monomer mit zwei oder mehr reaktiven Gruppen pro Molekül ein (Meth)acrylat mit zwei oder mehr reaktiven Gruppen pro Molekül ist.

3. Poröse Folie nach Anspruch 1 oder 2, wobei das Monomer mit zwei oder mehr reaktiven Gruppen pro Molekül ein Alkylenglycoldi(meth)acrylat oder ein Urethandi(meth)acrylat ist.

4. Poröse Folie nach einem der Ansprüche 1 bis 3, wobei ein Homopolymer, das das Monomer mit zwei oder mehr Molekülen aufweist, eine Glasübergangstemperatur von -50°C oder höher und 0°C oder niedriger aufweist.

5. Poröse Folie nach einem der Ansprüche 1 bis 4, wobei die Partikeln A weiterhin wenigstens ein spezifisches Monomer enthalten, das aus der Gruppe ausgewählt ist, die aus einem ungesättigten Carbonsäure-Monomer, einem (Meth)acrylsäureester-Monomer, einem Styrol-basierten Monomer, einem Olefin-basierten Monomer, einem Dien-basierten Monomer und einem Amid-basierten Monomer besteht, und wobei die Partikeln A das Monomer mit einem Anteil von 20 Massen-% oder mehr und 80 Massen-% oder weniger enthalten.

6. Poröse Folie nach einem der Ansprüche 1 bis 5, wobei das Copolymer mit dem Fluorhaltigen (Meth)acrylat-Monomer und dem Monomer mit zwei oder mehr reaktiven Gruppen pro Molekül ein Copolymer ist, das weiterhin wenigstens ein spezifisches Monomer enthält, das aus der Gruppe ausgewählt ist, die aus einem ungesättigten Carbonsäure-Monomer, einem (Meth)acrylsäureester-Monomer, einem Styrol-basierten Monomer, einem Olefin-basierten Monomer, einem Dien-basierten Monomer und einem Amid-basierten Monomer besteht.

7. Poröse Folie nach Anspruch 5 oder 6, wobei wenigstens eines der (Meth)acrylsäureester-Monomere ein Monomer ist, das aus Isobornyl(meth)acrylat, Dicyclopentanyl(meth)acrylat, Dicyclopentyl(meth)acrylat, Cyclohexyl(meth)acrylat oder Benzyl(meth)acrylat ausgewählt ist.

8. Poröse Folie nach Anspruch 5 oder 6, wobei wenigstens eines der (Meth)acrylsäureester-Monomere ein (Meth)acrylsäureester-Monomer mit einer darin enthaltenen monocyclischen cyclischen Kohlenwasserstoffgruppe oder ein mit einer oder mehreren Alkylgruppen substituiertes (Meth)acrylsäureester-Monomer ist.

9. Poröse Folie nach Anspruch 5 oder 6, wobei wenigstens eines der (Meth)acrylsäureester-Monomere ein (Meth)acrylsäureester-Monomer mit einer darin enthaltenen Hydroxylgruppe ist und die Partikeln A das (Meth)acrylsäureester-Monomer, das eine Hydroxylgruppe mit einem Anteil von 1 Massen-% oder mehr und 10 Massen-% oder weniger enthält.

10. Poröse Folie nach einem der Ansprüche 1 bis 9, wobei die Partikeln A das Fluor-haltige (Meth)acryl-Monomer mit einem Anteil von mehr als 20 Massen-% und 80 Massen-% oder weniger enthalten.

11. Poröse Folie nach einem der Ansprüche 1 bis 10, wobei das Fluor-haltige (Meth)acrylat-Monomer 3 oder mehr und 13 oder weniger Fluoratome enthält.

12. Poröse Folie nach einem der Ansprüche 1 bis 11, wobei die Partikeln A eine Glasübergangstemperatur von -30°C oder höher und 100 °C oder niedriger aufweisen.

13. Poröse Folie nach einem der Ansprüche 1 bis 12, wobei die poröse Schicht Partikeln B mit darin enthaltenen anorganischen Partikeln enthält.

14. Poröse Folie nach Anspruch 13, wobei die poröse Schicht die Partikeln B mit einem Anteil von 60 Massen-% oder mehr und 95 Massen-% oder weniger enthält, wobei alle Komponenten der porösen Schicht insgesamt 100 Massen-% ausmachen.

15. Poröse Folie nach einem der Ansprüche 1 bis 14, wobei die poröse Schicht ein Fluorfreies organisches Partikel C enthält.

16. Separator für eine Sekundärbatterie, der die poröse Folie gemäß einem der Ansprüche 1 bis 15 umfasst.

17. Sekundärbatterie, die den Separator für eine Sekundärbatterie gemäß dem Anspruch 16 umfasst.

## Revendications

1. Film poreux comprenant : un substrat poreux ; et une couche poreuse sur au moins une surface du substrat poreux, la couche poreuse contenant des particules A, les particules A ayant un mélange qui contient : un polymère qui comprend un monomère (méth)acrylate contenant du fluor ; et un polymère qui comprend un monomère ayant deux groupes réactifs ou plus par molécule, ou les particules A ayant un copolymère qui contient : un monomère
(méth)acrylate contenant du fluor ; et un monomère ayant deux groupes réactifs ou plus par molécule, les particules A contenant le monomère ayant deux groupes réactifs ou plus par molécule en une quantité de plus de 10 % en masse et de 30 % en masse ou moins, tous les composants des particules A étant supposés constituer 100 % en masse.

2. Film poreux selon la revendication 1, dans lequel le monomère ayant deux groupes réactifs ou plus par molécule est un (méth)acrylate ayant deux groupes réactifs ou plus par molécule.

3. Film poreux selon la revendication 1 ou 2, dans lequel le monomère ayant deux groupes réactifs ou plus par molécule est un di(méth)acrylate d'alkylène glycol ou le di(méth)acrylate d'uréthane.

4. Film poreux selon l'une quelconque des revendications 1 à 3, dans lequel un homopolymère qui comprend le monomère ayant deux groupes réactifs ou plus par molécule a une température de transition vitreuse de -50 °C ou plus et de 0 °C ou moins.

5. Film poreux selon l'une quelconque des revendications 1 à 4, dans lequel les particules A contiennent en outre au moins un monomère particulier choisi dans le groupe constitué d'un monomère acide carboxylique insaturé, d'un monomère ester d'acide (méth)acrylique, d'un monomère à base de styrène, d'un monomère à base d'oléfine, d'un monomère à base de diène et d'un monomère à base d'amide, et les particules A contiennent le monomère en une quantité de 20 % en masse ou plus et de 80 % en masse ou moins.

6. Film poreux selon l'une quelconque des revendications 1 à 5, dans lequel le copolymère ayant le monomère (méth)acrylate contenant du fluor et le monomère ayant deux groupes réactifs ou plus par molécule est un copolymère contenant en outre au moins un monomère particulier choisi dans le groupe constitué d'un monomère acide carboxylique insaturé, d'un monomère ester d'acide (méth)acrylique, d'un monomère à base de styrène, d'un monomère à base d'oléfine, d'un monomère à base de diène, et d'un monomère à base d'amide.

7. Film poreux selon la revendication 5 ou 6, dans lequel au moins un des monomères esters d'acide (méth)acrylique est un monomère choisi parmi le (méth)acrylate d'isobornyle, le (méth)acrylate de dicyclopentanyle, le (méth)acrylate de dicyclopentényle, le (méth)acrylate de cyclohexyle ou le (méth)acrylate de benzyle.

8. Film poreux selon la revendication 5 ou 6, dans lequel au moins un des monomères esters d'acide (méth)acrylique est un monomère ester d'acide (méth)acrylique qui comprend un groupe hydrocarboné cyclique monocyclique, ou est un monomère ester d'acide (méth)acrylique substitué par un ou plusieurs groupes alkyle.

9. Film poreux selon la revendication 5 ou 6, dans lequel au moins un des monomères esters d'acide (méth)acrylique est un monomère ester d'acide (méth)acrylique comprenant un groupe hydroxyle, et les particules A contiennent le monomère ester d'acide (méth)acrylique comprenant un groupe hydroxyle en une quantité de 1 % en masse ou plus et de 10 % en masse ou moins.

10. Film poreux selon l'une quelconque des revendications 1 à 9, dans lequel les particules A contiennent le monomère (méth)acrylate contenant du fluor en une quantité de plus de 20 % en masse et de 80 % en masse ou moins.

11. Film poreux selon l'une quelconque des revendications 1 à 10, dans lequel le monomère (méth)acrylate contenant du fluor contient 3 atomes de fluor ou plus et 13 atomes de fluor ou moins.

12. Film poreux selon l'une quelconque des revendications 1 à 11, dans lequel les particules A ont une température de transition vitreuse de -30 °C ou plus et 100 °C ou moins.

13. Film poreux selon l'une quelconque des revendications 1 à 12, dans lequel la couche poreuse contient des particules B comprenant des particules inorganiques.

14. Film poreux selon la revendication 13, dans lequel la couche poreuse contient les particules B en une quantité de 60 % en masse ou plus et de 95 % en masse ou moins, tous les composants de la couche poreuse étant supposés constituer 100 % en masse.

15. Film poreux selon l'une quelconque des revendications 1 à 14, dans lequel la couche poreuse contient une particule organique C exempte de fluor.

16. Séparateur pour batterie secondaire, comprenant le film poreux selon l'une quelconque des revendications 1 à 15.

17. Batterie secondaire, comprenant le séparateur pour batterie secondaire selon la revendication 16.
